(19) Europäisches Patentamt
European Patent Office
Office européen des brevets

(11) **EP 2 315 053 B1**

(12) **EUROPÄISCHE PATENTSCHRIFT**

(45) Veröffentlichungstag und Bekanntmachung des Hinweises auf die Patenterteilung:
**21.11.2012   Patentblatt 2012/47**

(51) Int Cl.:
*G01S 17/10* <sup>(2006.01)</sup>   *G01S 7/497* <sup>(2006.01)</sup>
*G01S 7/481* <sup>(2006.01)</sup>   *G01S 7/487* <sup>(2006.01)</sup>

(21) Anmeldenummer: **10450150.7**

(22) Anmeldetag: **04.10.2010**

(54) **Vorrichtungen und  Verfahren zum Messen der Empfangszeitpunkte von Impulsen**

Method and device for measuring the receiving times of impulses

Dispositifs et procédé de mesure des moments de réception d'impulsions

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2009   AT 16452009**

(43) Veröffentlichungstag der Anmeldung:
**27.04.2011   Patentblatt 2011/17**

(73) Patentinhaber: **Riegl Laser Measurement Systems Gmbh
3580 Horn (AT)**

(72) Erfinder:
• **Pfennigbauer, Martin
3430 Tulln (AT)**
• **Ullrich, Andreas
3003 Gablitz (AT)**
• **Zierlinger, Wolfgang
3495 Rohrendorf (AT)**

(74) Vertreter: **Weiser, Andreas
Patentanwalt
Kopfgasse 7
1130 Wien (AT)**

(56) Entgegenhaltungen:
**EP-A2- 0 797 105     US-A- 4 541 279**

**Beschreibung**

Die vorliegende Erfindung betrifft eine Vorrichtung zum Messen der Empfangszeitpunkte von sich zumindest teilweise überlagernden Impulsen in einem Empfangssystem, das zumindest einen Empfangskanal mit nicht-linearem Übertragungsverhalten enthält, welcher an seinem Ausgang ein Empfangssignal liefert.

Die Erfindung betrifft ferner eine Vorrichtung zum Messen der Empfangszeitpunkte von solchen Impulsen hohen Dynamikumfangs in einem Empfangssystem, das zumindest zwei parallele Empfangskanäle mit unterschiedlicher Empfindlichkeit enthält, welche an ihren Ausgängen einen Satz zeitparalleler Empfangssignale liefern.

Im weiteren bezieht sich die Erfindung auch auf Verfahren zum Messen der Empfangszeitpunkte derartiger Impulse.

Aus der EP 0 797 105 A2 ist es zur Signallaufzeitmessung bekannt, ein einzelnes Empfangssignal mit einem einzelnen gespeicherten Referenzsignal zu korrelieren, wobei das Maximum der Einhüllenden der Korrelationsfunktion ein Maß für die zeitliche Lage des Empfangssignals bezogen auf den Zeitmaßstab des Referenzsignals ist. Die US 4 541 279 beschreibt einen ähnlichen Signalvergleich zur Laufzeitkompensation bei Ultraschallwandlern.

Die vorliegende Anmeldung ist eine Weiterentwicklung der früheren, nicht-vorveröffentlichten Anmeldung AT A 575/2009 (PCT/AT 2009/000146) derselben Anmelderin.

Die exakte Messung der Empfangszeitpunkte von Impulsen ist in der Vermessungstechnik, beispielsweise zur Entfernungsbestimmung mittels Messung der Laufzeit eines optischen Impulses, von enormer praktischer Bedeutung. Bereits ein Zeitmeßfehler von 1 ns entspricht hier einem Entfernungsmeßfehler von 30 cm, was für hochpräzise Anforderungen inakzeptabel ist. Andere Präzisionsanwendungen liegen beispielsweise in der Satellitennavigation, bei welcher der Empfangszeitpunkt von Satellitenfunkimpulsen hochgenau in einem globalen Zeitmaßstab bestimmt werden muß.

Aufgrund der Bandbegrenzung üblicher Sendeund Empfangssysteme und wechselnder Eigenschaften des zwischenliegenden Übertragungsweges sind in einem realen Empfangssystem empfangene Impulse - selbst wenn sie ursprünglich als ideale Rechteckimpulse erzeugt wurden - stets einer gewissen Verzerrung ihrer Impulsform unterworfen, was die Festlegung eines genauen Empfangszeitpunkts erschwert. Für Entfernungsauflösungen im Millimeterbereich ist beispielsweise eine Zeitauflösung im Pikosekundenbereich erforderlich, die bei derart verzerrten Impulsen mit einer klassischen Schwellwerterkennung der ansteigenden oder abfallenden Impulsflanke nicht erreichbar ist.

Besonders problematisch ist die Empfangszeitpunktsbestimmung bei Impulsen, die zeitlich so knapp aufeinanderfolgen, daß sie sich in einem Empfangssystem zumindest teilweise überlagern. Dies tritt beispielsweise bei Laserentfernungsmessern bzw. -scannern auf, wenn der ausgesandte Laserimpuls auf mehrere in seinem Strahlquerschnitt liegende Ziele mit derart geringen Entfernungsunterschieden trifft, daß die reflektierten Laserimpulse sich im Empfangssignal zeitlich zu überlappen beginnen.

Zur korrekten Auswertung solcher Mehrzielsituationen wurden bereits verschiedene Lösungen vorgeschlagen. Ein bekanntes Verfahren ist die sog. Gauß'sche Dekomposition, bei welcher versucht wird, das Empfangssignal durch eine Überlagerung von Gaußimpulsen variierender Amplitude und Zeitlage anzunähern, siehe in Wolfgang Wagner, Andreas Ullrich, Vesna Ducic, Thomas Melzer, Nick Studnicka, "Gaussian Decomposition and Calibration of a Novel Small-Footprint Full-Waveform Digitising Airborne Laser Scanner", ISPRS Journal of Photogrammetry and Remote Sensing, 2005. Die Zuverlässigkeit und Genauigkeit dieser Verfahren ist in praktischen Mehrzielsituationen noch verbesserungsfähig.

Darüber hinaus wird der Einsatz der bekannten Verfahren zusätzlich dadurch erschwert, daß die an einem Ziel reflektierten Impulse ("Echoimpulse") - gleichgültig ob es sich dabei um optische, Funk- oder akustische Impulse handelt - je nach Entfernung und Reflexionsgrad ("schwarz", "weiß" oder sogar "hochreflektierend") des Ziels einen extrem großen Amplitudendynamikbereich einnehmen können, z.B. von über 60 dB in der optischen Leistung bzw. über 120 dB im elektrischen Ausgangssignal einer Photodiode. Empfangssysteme, welche einen derart großen Dynamikbereich verarbeiten können, enthalten in der Regel komprimierende, d.h. stark nicht-lineare Komponenten im Empfangskanal, und/oder es müssen mehrere parallele Empfangskanäle mit unterschiedlicher Eingangsempfindlichkeit vorgesehen werden, um das Empfangssignal auf einzelne leichter weiterzuverarbeitende Dynamikbereiche aufzuteilen. Beide Maßnahmen führen zu einer weiteren Verzerrung der Impulsform im Empfangssystem, welche die genaue Festlegung des Empfangszeitpunkts noch weiter erschwert.

Die Erfindung setzt sich zum Ziel, die genannten Nachteile des Standes der Technik zu überwinden und Vorrichtungen und Verfahren zum Messen der Empfangszeitpunkte von sich zumindest teilweise überlagernden Impulsen zu schaffen, welche eine verbesserte Genauigkeit haben, u.zw. insbesondere für Empfangsimpulse von hohem Dynamikumfang.

Dieses Ziel wird in einem ersten Aspekt der Erfindung mit einer Vorrichtung zum Messen der Empfangszeitpunkte von sich zumindest teilweise überlagernden Impulsen in einem Empfangssystem erreicht, das zumindest einen Empfangskanal mit nicht-linearem Übertragungsverhalten enthält, welcher an seinem Ausgang ein Empfangssignal liefert, und die sich durch einen Speicher, in dem die Empfangssignale von Referenzimpulsen vorgegebener unterschiedlicher Amplitude als Referenzsignale bezogen auf einen Zeitmaßstab vorliegen, und eine an das Empfangssystem und den Speicher angeschlossene Auswerteeinrichtung auszeichnet, welche ein Empfangssignal mit zumindest zwei einander überlagerten Referenzsignalen unter jeweils variierendem Zeitversatz vergleicht, um jene Referenzsignale und Zeitversätze zu ermitteln, bei denen die Vergleichsabweichung minimal ist, und diese Zeitversätze als Empfangszeitpunkte bezüglich des Zeitmaßstabs ausgibt.

Die Erfindung berücksichtigt erstmals das Verhalten von realen Empfangssystemen bei Empfangsimpulsen unterschiedlicher Amplitude durch Heranziehung der damit einhergehenden unterschiedlichen Impulsverformungen zur Bestimmung der Empfangszeitpunkte von sich überlappenden Impulsen ("Impulsgruppe"). Durch Annähern der Empfangsimpulsgruppe im Empfangssignal durch eine Überlagerung von Referenzsignalen, die einer das Dynamikverhalten des Empfangssystems repräsentierende Amplitudenschar von Referenzsignalen entstammen, der sog. "Signaturfläche" des Empfangssystems, läßt sich erstmals das Empfangssignal wesentlich genauer in die konstituierenden Empfangsimpulse zerlegen und damit genauere Festlegungen der Empfangszeitpunkte der Impulse erreichen als mit allen bisher bekannten Verfahren. Die Signaturfläche ist für jedes individuelle Empfangssystem charakteristisch, wodurch auch Serienstreuungsfehler vermieden werden können.

Eine besonders vorteilhafte Ausführungsform der Erfindung besteht in einer Vorrichtung zum Messen der Empfangszeitpunkte von sich zumindest teilweise überlagernden Impulsen hohen Dynamikumfangs in einem Empfangssystem, das zumindest zwei parallele Empfangskanäle mit unterschiedlicher Empfindlichkeit enthält, welche an ihren Ausgängen einen Satz zeitparalleler Empfangssignale liefern, und die sich durch einen Speicher, in dem die Sätze von Empfangssignalen von Referenzimpulsen vorgegebener unterschiedlicher Amplitude als Referenzsätze bezogen auf einen Zeitmaßstab vorliegen, und eine an das Empfangssystem und den Speicher angeschlossene Auswerteeinrichtung auszeichnet, welche einen Satz von Empfangssignalen mit zumindest zwei einander kanalweise überlagerten Referenzsätzen unter jeweils variierendem Zeitversatz vergleicht, um jene Referenzsätze und Zeitversätze zu ermitteln, bei denen die Vergleichsabweichung minimal ist, und diese Zeitversätze als Empfangszeitpunkte bezüglich des Zeitmaßstabs ausgibt.

Diese Ausführungsform erweitert das Konzept der Erfindung auf Empfangssysteme mit mehreren Kanälen mit unterschiedlichen Dynamikbereichen. Die Erfindung beruht auf der Erkenntnis, daß in dynamikgesplitteten Empfangskanälen ein und dieselbe Empfangsimpulsgruppe in jedem Kanal zu einer unterschiedlich verformten Impulsgruppe führt, welche jeweils auf die zuvor genannte Art und Weise mittels Überlagerungen von Referenzsignalen aus jeweils - nur kanalspezifischen - Signaturflächen angenähert werden kann. Durch die kombinierte Auswertung aller Kanäle mit Hilfe eines gemeinsamen Abweichungskriteriums ergibt sich in Summe eine nochmalige signifikante Verbesserung der Zuverlässigkeit und Genauigkeit der Empfangszeitpunktsbestimmung.

Die erfindungsgemäßen Vorrichtungen eignen sich bevorzugt für Empfangssysteme, bei denen der bzw. die Empfangskanäle analoger und der Speicher und die Auswerteeinrichtung digitaler Art sind, wobei am Ausgang jedes Empfangskanals ein Analog/Digital-Wandler liegt. Die Dynamikanpassung erfolgt damit zeitunkritisch auf analoge Art, während die Eigenschaften des analogen Teils im digitalen Teil ausgewertet werden können.

Gemäß einer besonders vorteilhaften Variante der Erfindung wird vorgesehen, daß die Referenzsignale bzw. Referenzsätze in dem Speicher in einer hohen ersten Zeitauflösung vorliegen, das bzw. die Empfangssignale eines Impulses mit einer geringen zweiten Zeitauflösung abgetastet sind, und die Auswerteeinrichtung die Zeitversätze in den Auflösungsschritten der hohen ersten Zeitauflösung variiert. Bevorzugt interpoliert die Auswerteeinrichtung dabei noch zusätzlich zwischen diesen Auflösungsschritten, um eine noch feinere Zeitauflösung zu erreichen.

Dadurch kann mit einer für den Echtzeitbetrieb geeigneten geringen Abtastrate von z.B. 500 MSamples/s (entspricht einer geringen Zeitauflösung von 2 ns) eine wesentlich höhere Zeitauflösung bei der Bestimmung der Empfangszeitpunkte erreicht werden. Letztere ist im wesentlichen nur durch den Speicherplatz, die Rechenleistung und das Signal/Rausch-Verhältnis begrenzt, die für die Verarbeitung der Referenzsignale und -sätze zur Verfügung stehen, und kann durchaus das Tausendfache und mehr betragen, z.B. 500 GSamples/s entsprechend einer hohen Zeitauflösung von 2 ps.

Demgemäß liegt bevorzugt die genannte erste (hohe) Zeitauflösung in der Größenordnung von Pikosekunden (ps) und die genannte zweite (geringe) Zeitauflösung in der Größenordnung von Nanosekunden (ns).

Ein weiterer Vorteil der Erfindung besteht darin, daß sie als Nebenprodukt auch einen Meßwert über die Amplituden der Impulse liefern kann. Zu diesem Zweck wird in vorteilhafter Weise vorgesehen, daß der Speicher zu jedem Referenzsignal bzw. Referenzsatz auch die Amplitude des zugehörigen Referenzimpulses enthält und die Auswerteeinrichtung die Amplituden jener Referenzimpulse, welche zu den ermittelten Referenzsignalen bzw. Referenzsätzen gehören, als Amplituden der Impulse ausgibt. Optional kann die Auswerteeinrichtung dabei auch zwischen den Amplituden der Referenzsätze interpolieren, um eine feinere Amplitudenauflösung zu erzielen. Die Erfindung ermöglicht damit mit denselben Mitteln gleichzeitig die Bestimmung der Empfangszeitpunkte und der Amplituden der einzelnen Impulse einer Impulsgruppe.

Bevorzugt gibt die Auswerteeinrichtung für die gemessenen Empfangszeitpunkte auch die zugehörige Vergleichsabweichung aus, sodaß die Vorrichtung gleich auch ein Maß über die Qualität ihrer Meßwerte mitliefert.

In weiteren bevorzugten Ausführungsformen können die erfindungsgemäßen Vorrichtungen jeweils zumindest einen Sensor enthalten, welcher einen Betriebszustand eines oder mehrerer Empfangskanäle mißt und an seinem Ausgang gleichsam als weiteres Empfangssignal bereitstellt, wobei der Speicher solch weitere Empfangssignale der Referenzimpulse als weitere Referenzsignale enthält, und wobei die Auswerteeinrichtung bei dem genannten Vergleich auch ein solch weiteres Empfangssignal mit den weiteren Referenzsignalen vergleicht und in die Ermittlung der Vergleichsabweichung einbezieht.

Auf diese Weise werden zusätzlich zu den Empfangssignalen auch Kriterien über die Empfangskanäle als "weitere Empfangssignale" erhalten und als zusätzliche Vergleichskriterien beim Annähern der Empfangssignale durch die Überlagerung von Referenzsignalen aus der Signaturfläche verwendet, was die Genauigkeit der Empfangszeitpunktsbestimmung noch weiter verbessert.

Eine andere vorteilhafte Ausführungsform der Erfindung zeichnet sich dadurch aus, daß die Vorrichtung zumindest einen Sensor enthält, welcher die Betriebstemperatur eines oder mehrerer Empfangskanäle mißt, der Speicher Referenzsignale bzw. Referenzsätze für verschiedene Betriebstemperaturen enthält, und die Auswerteeinrichtung daraus die für die jeweils aktuelle Betriebstemperatur gültigen Referenzsignale bzw. Referenzsätze ermittelt, erforderlichenfalls durch Inter- oder Extrapolation, und bei dem genannten Vergleich verwendet. Damit wird eine thermische Kompensation und nochmalige Erhöhung der Meßgenauigkeit erreicht.

Das Annähern der Empfangsimpulsgruppe durch die Überlagerung von Referenzsignalen aus der Referenzsignalschar bzw. Signaturfläche ("Minimalwertvergleich") kann mit Hilfe jedes in der Technik bekannten Matching- bzw. Korrelationsverfahrens erfolgen. Bevorzugt wird die Ermittlung der minimalen Vergleichsabweichung mittels eines Least-Squares-Verfahrens durchgeführt, welches ein stabiles Kriterium liefert.

Dabei kann bevorzugt der Speicher insbesondere auch Gewichtungswerte für die Referenzsignale bzw. Referenzsätze enthalten, welche in die Ermittlung der minimalen Vergleichsabweichung Eingang finden, um Feinabstimmungen vornehmen zu können.

Eine weitere vorteilhafte Ausführungsform der Erfindung besteht darin, daß die Referenzsignale auch von Referenzimpulsen unterschiedlicher Impulsform stammen. Durch Ermitteln der Referenzsignale mit der minimalen Vergleichsabweichung können auf diese Weise nicht nur die Empfangszeitpunkte und optional die Amplituden der Impulse im Empfangssignal bestimmt werden, sondern sogar die Impulsform und damit insbesondere auch impulsformende Eigenschaften eines Reflexionsziels für einen ausgesandten Impuls, z.B. seine Neigung zur Strahlrichtung und/oder seine Oberflächenstruktur.

In einem zweiten Aspekt erreicht die Erfindung ihre Ziele mit einem Verfahren zum Messen der Empfangszeitpunkte von sich zumindest teilweise überlagernden Impulsen in einem Empfangssystem, das zumindest einen Empfangskanal mit nicht-linearem Übertragungsverhalten enthält, welcher an seinem Ausgang ein Empfangssignal liefert, gekennzeichnet durch die Schritte

Zurverfügungstellen der Empfangssignale von Referenzimpulsen vorgegebener unterschiedlicher Amplitude als Referenzsignale bezogen auf einen Zeitmaßstab,

Vergleichen eines Empfangssignals mit zumindest zwei einander überlagerten Referenzsignalen unter jeweils variierendem Zeitversatz, um jene Referenzsignale und Zeitversätze zu ermitteln, bei denen die Vergleichsabweichung minimal ist, und

Ausgeben dieser Zeitversätze als Empfangszeitpunkte bezüglich des Zeitmaßstabs.

Eine besonders vorteilhafte Variante der Erfindung ist ein Verfahren zum Messen der Empfangszeitpunkte von sich zumindest teilweise überlagernden Impulsen hohen Dynamikumfangs in einem Empfangssystem, das zumindest zwei parallele Empfangskanäle mit unterschiedlicher Empfindlichkeit enthält, welche an ihren Ausgängen einen Satz zeitparalleler Empfangssignale liefern, gekennzeichnet durch die Schritte

Zurverfügungstellen der Sätze von Empfangssignalen von Referenzimpulsen vorgegebener unterschiedlicher Amplitude als Referenzsätze bezogen auf einen Zeitmaßstab,

Vergleichen eines Satzes von Empfangssignalen mit zumindest zwei einander kanalweise überlagerten Referenzsätzen unter jeweils variierendem Zeitversatz, um jene Referenzsätze und Zeitversätze zu ermitteln, bei denen die Vergleichsabweichung minimal ist, und

Ausgeben dieser Zeitversätze als Empfangszeitpunkte bezüglich des Zeitmaßstabs.

Hinsichtlich der Vorteile der erfindungsgemäßen Verfahren wird auf die obigen Erläuterungen zu den Vorrichtungen verwiesen.

Besonders vorteilhaft ist es, wenn die Referenzsignale bzw. Referenzsätze in einer hohen ersten Zeitauflösung zur Verfügung gestellt werden, das bzw. die Empfangssignale mit einer geringen zweiten Zeitauflösung abgetastet werden, und beim Vergleichen die Zeitversätze in den Auflösungsschritten der hohen ersten Zeitauflösung, bevorzugt zusätzlich verfeinert durch Interpolation, variiert werden.

Die Erzeugung der Referenzsignale kann auf bevorzugte Weise dadurch erreicht werden, daß mehrere gleichartige und in den Auflösungsschritten einer hohen Zeitauflösung zeitversetzte Referenzimpulse verwendet werden, deren Empfangssignale mit einer geringen Zeitauflösung abgetastet und kämmend zum Referenzsignal zusammengesetzt werden.

Das genannte Zeitversetzen der Referenzimpulse in den Schritten der hohen Zeitauflösung kann beispielsweise durch entsprechend phasenverschobenes Triggern der Aussendung der Referenzimpulse oder durch Verändern der Länge ihres Übertragungswegs, beispielsweise durch Verstellen eines Reflexionsziels, auf einfache Art und Weise erreicht werden.

Eine noch höhere Meßgenauigkeit wird erreicht, wenn gemäß einem weiteren bevorzugten Merkmal der Erfindung das zusammengesetzte Referenzsignal durch Einfügen von Interpolationswerten auf eine noch höhere Zeitauflösung gebracht wird.

Weitere Merkmale und Vorteile der Erfindung ergeben sich aus der nachfolgenden Beschreibung ihrer bevorzugten Ausführungsformen, welche auf die begleitenden Zeichnungen bezug nimmt, in denen zeigen:

Fig. 1 ein Blockschaltbild einer ersten Ausführungsform einer Meßvorrichtung mit einem Empfangskanal;

Fig. 2 eine Schar von Referenzimpulsen unterschiedlicher Amplitude;

Fig. 3 eine Schar von Referenzsignalen, wie sie als Empfangssignale am Ausgang eines nicht-linearen Empfangskanals in Antwort auf die Referenzimpulse von Fig. 2 erhalten werden und eine Signaturfläche aufspannen;

Fig. 4 das Einpassen der Abtastwerte eines Empfangssignals in eine Referenzsignalschar (Signaturfläche) unter variierendem Zeit- und Amplitudenindexversatz;

Fig. 5 ein Blockschaltbild einer zweiten Ausführungsform einer Meßvorrichtung mit einem Empfangskanal;

Fig. 6 das Verfahren zur Erzeugung eines hochaufgelösten Referenzsignals in vier aufeinanderfolgenden Verfahrensstufen;

Fig. 7 ein Blockschaltbild einer dritten Ausführungsform einer Meßvorrichtung mit mehreren Empfangskanälen;

Fig. 8 den Schritt des Einpassens der Abtastwerte eines Mehrkanal-Satzes von Empfangssignalen in einen Mehrkanal-Satz von Referenzsignal-Scharen (Signaturflächen) unter variierendem Zeit- und Amplitudenindexversatz;

Fig. 9 eine erste Variante eines mehrkanaligen Empfangssystems in elektrischer Blockschaltbildform;

Fig. 10 eine zweite Variante eines mehrkanaligen Empfangssystems in opto-elektrischer Blockschaltbildform;

Fig. 11 die Signaturflächen des unteren und des mittleren Kanals von Fig. 8 in der Draufsicht mit Graustufenkodierung der Amplitudenwerte;

Fig. 12 Gewichtungswertflächen für die Signaturflächen von Fig. 11 in der Draufsicht mit Graustufenkodierung der Gewichtungswerte;

die Fig. 13 und 14 die erfindungsgemäße Anwendung der Prinzipien der Vorrichtungen und Verfahren der Fig. 1 bis 12 zum Messen der Empfangszeitpunkte von mehreren sich zumindest teilweise überlappenden Impulsen; und

Fig. 15 Referenzimpulse für eine weitere Ausführungsform der erfindungsgemäßen Vorrichtungen und Verfahren.

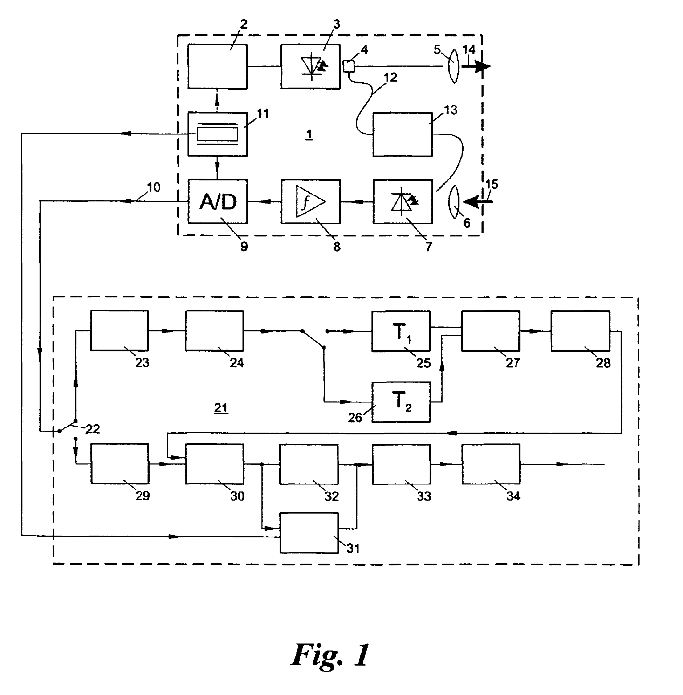

In Fig. 1 ist mit 1 ein Laser-Entfernungsmesser bezeichnet, der einen Impulsgeber 2 umfaßt. Der Impulsgeber 2 steuert eine Laserquelle 3 an, welche einen optischen Impuls aussendet, wenn sie mit einem elektrischen Triggerimpuls angesteuert wird. Der Laserstrahl wird durch eine Optik 5 gebündelt, in das Meßfeld ausgesandt (Pfeil 14) und an einem im Meßfeld befindlichen Ziel, im allgemeinen diffus, gestreut. Ein Teil der gestreuten Strahlung gelangt zurück zum Entfernungsmesser 1 (Pfeil 15) und wird durch ein Objektiv 6 auf eine Photodiode 7 fokussiert. Zur Erzielung einer hohen Empfindlichkeit des Entfernungsmessers wird vorzugsweise eine Lawinenphotodiode (avalanche photo diode, APD) eingesetzt. Der auf die Photodiode 7 auftreffende optische Impuls wird in einen elektrischen Impuls umgesetzt. Der Photodiode 7 sind ein Verstärker (mit Filter) 8 nachgeschaltet.

Da sich je nach Entfernung des Zieles und seiner Reflektivität die empfangenen optischen Impulse um mehrere Größenordnungen unterscheiden können, weist der Verstärker 8 im allgemeinen eine nicht-lineare Charakteristik auf, durch welche die Dynamik der elektrischen Impulse begrenzt wird. Diese Impulse werden in einem Analog/Digital-Wandler 9 digitalisiert. Die einem Impuls entsprechenden Abtastwerte werden über eine digitale Schnittstelle 10 ausgegeben und in einer Auswerteeinrichtung 21 ausgewertet. Der Analog/Digital-Wandler 9 wird durch einen Taktgenerator 11 getaktet. Der Taktgenerator 11 kann auch den Impulsgeber 2 triggern.

Wird als Laser 3 eine Laserdiode eingesetzt, so gibt es eine fixe, exakte zeitliche Beziehung zwischen dem elektrischen Ausgangsimpuls des Impulsgebers 2 und dem optischen Laserimpuls. Die Impulslaufzeit und damit die Entfernung zum Ziel kann somit direkt aus der zeitlichen Position des elektrischen Impulses des Impulsgebers 2 und der zeitlichen Position des empfangenen Echoimpulses ermittelt werden.

Zur Erzielung großer Reichweiten des Entfernungsmessers ist es erforderlich, Laserquellen mit größerer Leistung einzusetzen. Hierzu bieten sich sog. gepumpte Laser an, insbesondere diodengepumpte Laser. Da bei diesen Lasertypen der optische Impuls spontan ausgelöst wird, fehlt hier die exakte zeitliche Beziehung zwischen den elektrischen Pulsen des Impulsgebers 2 und den vom Laser ausgesandten optischen Impulsen. In einem solchen Fall erübrigt es sich, den Impulsgeber 2 durch den Taktgenerator 11 zu triggern.

Unabhängig von der eingesetzten Laserquelle kann zur Ermittlung des exakten Zeitpunkts der Aussendung des optischen Impulses der Photodiode 7 ein mittels eines optischen Elements 4, beispielsweise eines Strahlteilerwürfels, aus dem Sendestrahl ausgekoppelter kleiner Anteil des Laserimpulses über einen Lichtleiter, z.B. über ein Glasfaserkabel 12, zugeführt werden. Das Glasfaserkabel 12 besitzt eine definierte Länge und kann gegebenenfalls durch eine optische Abschwächeinrichtung 13 ergänzt werden. Der auf diese Weise gewonnene Startimpuls löst die Messung der zeitlichen Position von Echoimpuls und Startimpuls aus, aus der schließlich die Entfernung ermittelt wird.

Die Definition der zeitlichen Lage der Impulse in Genauigkeit und Auflösung wird entscheidend verbessert, indem aus dem digitalisierten elektrischen Signal ausgewählte Abtastwerte genommen werden und in zuvor gewonnene, für die Laufzeitmessung relevante Geräteeigenschaften enthaltende Signaturflächen eingepaßt werden.

Bei der Erfassung dieser Geräteeigenschaften werden dem Empfangskanal optische Impulse verschiedener Amplitude und konstanter Impulslaufzeit zugeleitet. Die optischen Impulse werden in der Photodiode 7 in elektrische Signale umgewandelt und im Verstärker 8 verstärkt. Durch eine zeitliche Mittelung kann dabei das Signal/Rausch-Verhältnis verbessert werden. Durch eine definierte sukzessive zeitliche Verschiebung der Laserimpulse in Bezug auf den Abtasttakt kann ferner eine effektive Abtastung der Empfangssignale mit einem Vielfachen der Taktfrequenz erzielt werden. Nach der Signaldetektion, insbesondere nach einer Diskriminierung gegenüber Rauschen, wird aus der Vielzahl der sich ergebenden elektrischen Impulse bzw. den entsprechenden Abtastwerten eine Signaturfläche ermittelt, in welche dann bei der Messung ausgewählte Abtastwerte der Impulse eingepaßt werden, wodamit die zeitliche Lage der Impulse mit hoher Genauigkeit ermittelt wird.

Für den Fall, daß Laser eingesetzt werden, für die es keine fixe, exakte zeitliche Beziehung zwischen dem elektrischen Ausgangsimpuls des Impulsgebers 2 und dem optischen Laserimpuls gibt, z.B. diodengepumpte Laser, kann die Bestimmung der zeitlichen Position der Echopulse beispielsweise durch eine Schwellwertdetektion erfolgen. Eine Überabtastung wird erzielt, indem mehrere Pulse gleicher Amplitude mit in Bezug auf den Abtastraster zufälliger zeitlicher Lage erfaßt werden. Eine Mittelung wie oben beschrieben kann in diesem Fall nicht erfolgen, aber es kann z.B. mit einer hohen zeitlich statistisch verteilten Überabtastung gearbeitet und anschließend, beispielsweise im Zuge der Berechnung der Signaturfläche, eine entsprechende Glättung vorgenommen werden.

Dem Entfernungsmesser 1 ist eine Auswerteeinrichtung 21 nachgeschaltet, die den über die Schnittstelle 10 ausgegebenen Datenstrom aufnimmt und im wesentlichen ein Rechenwerk (Signalprozessor) umfaßt. Die in der Zeichnung angegebenen Blöcke können sowohl mittels Hardware-Komponenten als auch softwaremäßig realisiert werden. Die Auswerteeinrichtung 21 weist einen ersten Modus für die Aufnahme der Signaturfläche und einen zweiten für die eigentliche Messung auf. Die Einstellung des jeweiligen Modus erfolgt mit dem Umschalter 22.

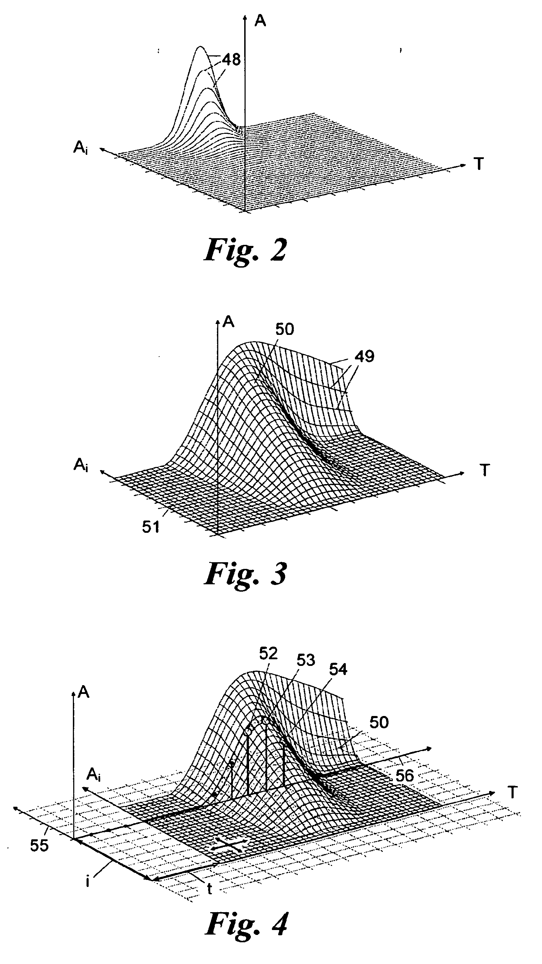

In Stufe 24 wird aus der Vielzahl der während des Aufnahmevorgangs gewonnenen Impulse eine Signaturfläche ermittelt, deren Einzelheiten anhand der Fig. 3, 4 und 8 noch näher erläutert werden. Im allgemeinen werden mehrere Signaturflächen bei verschiedenen Betriebstemperaturen (z.B. $T_1$ und $T_2$) der Vorrichtung ermittelt und in Teilspeichern 25 und 26 abgelegt. Für die eigentliche Messung des Impulsempfangszeitpunkts wird zunächst die aktuelle Betriebstemperatur gemessen und aus den in den Speichern 25 und 26 abgelegten Signaturflächen durch Interpolation und/oder Extrapolation eine der aktuellen Betriebstemperatur optimal angepaßte Signaturfläche berechnet (Block 27) und in einem Speicher 28 für die Verwendung bei der Messung bereitgestellt.

Zur Durchführung der Entfernungsmessung wird mit dem Schalter 22 auf Messung umgeschaltet. In einem ersten Schritt wird aus der Vielzahl der vom Analog/Digital-Wandler 9 pro abgegebenem Laserimpuls gelieferten Abtastwerte in Stufe 29 nach dort abgelegten Kriterien eine Auswahl von beispielsweise drei oder fünf Abtastwerten getroffen, deren mittlerer Wert z.B. jeweils die größte Amplitude aufweist. In Stufe 30 wird die im Speicher 28 bereitgestellte Signaturfläche an diese ausgewählten Abtastwerte angepaßt.

Auf diese Weise kann sowohl die zeitliche Position des Echoimpulses als auch jene des Startimpulses ermittelt werden. Durch Zählen der Takte des Taktgenerators 11 zwischen den zeitlichen Positionen von Start- und Echoimpuls in Stufe 31 wird die Impulslaufzeit zunächst grob ermittelt, während parallel hierzu in Stufe 32 die jeweilige zeitliche Position der Signaturfläche in Bezug auf den Taktraster sowohl für den Start- als auch für den Echoimpuls bestimmt wird. Aus diesen Werten wird in Stufe 33 die Impulslaufzeit mit hoher Genauigkeit berechnet. Aus der auf diese Weise gewonnenen Impulslaufzeit wird in 34 die Entfernung zwischen Entfernungsmesser und Ziel ermittelt.

In der Stufe 32 kann auch die Amplitude des Echoimpulses aus der Signaturfläche abgeleitet werden. In Verbindung mit der Impulslaufzeit kann aus diesem Wert auf die Reflektivität des Zieles und damit auf bestimmte Eigenschaften desselben rückgeschlossen werden.

In Fig. 2 ist eine Schar von optischen Impulsen ("Referenzimpulsen") 48 gezeigt. Die dargestellte optische Signalstärke (Amplitude) A entspricht dem gesamten Aussteuerbereich der Kombination aus Photodiode 7, Verstärker 8 und Analog/Digital-Wandler 9.

Fig. 3 veranschaulicht die für die optischen Impulse 48 am Ausgang des Verstärkers 8 erhaltenen elektrischen Impulse ("Empfangssignale") 49. Durch die Umwandlung der optischen Impulse 48 in der Photodiode 7 und durch die nicht-lineare Verstärkung im Verstärker 8 ist die Dynamik der elektrischen Impulse 49 gegenüber jener der optischen Impulse 48 deutlich reduziert. Es kommt durch die nicht-lineare Verstärkung und Sättigungseffekte auch zu erheblichen Veränderungen der Impulsform.

Die einzelnen Impulse bzw. die Abtastwerte derselben stehen in einer festen Phasenbeziehung zum Abtast- und Amplitudenraster 51, dessen Zeitmaßstab T durch den Taktgenerator 11 definiert wird. Die Abtastwerte sind im allgemeinen in Richtung des Amplitudenindex $A_i$ zunächst noch unregelmäßig verteilt. Aus der Vielzahl der Abtastwerte wird durch einen Anpassungsvorgang nun eine Signaturfläche 50 berechnet, deren Stützwerte gleichmäßig entsprechend dem Raster 51 verteilt sind. Die Signaturfläche 50 enthält in kompakter Form Informationen bezüglich der Impulsformen des elektrischen Echosignals über den gesamten nutzbaren Dynamikbereich des Empfangskanals.

Die Werte der Signaturfläche 50 zwischen den Stützstellen werden durch Interpolation ermittelt. Die Modellierung der Signaturfläche kann mittels eines Dreiecknetzes erfolgen, die genannte Anpassung kann hierbei auf ein lineares Gleichungssystem zurückgeführt werden. Mit Hilfe dieser Signaturfläche kann, wie an Hand der Fig. 4 nun erläutert wird, die zeitliche Position (Empfangszeitpunkt) eines empfangenen optischen Impulses (Echoimpuls oder Startimpuls) und dessen Signalstärke (Amplitude) mit hoher Genauigkeit und geringem Rechenaufwand bestimmt werden.

In Fig. 4 ist gezeigt, wie zum Messen des Empfangszeitpunktes eines Impulses ausgewählte Abtastwerte desselben in die Signaturfläche 50 "eingepaßt" werden. Aus den Abtastwerten eines elektrischen Impulses wurden gemäß den oben beschriebenen Methoden beispielsweise drei Abtastwerte 52, 53 und 54 ausgewählt. Durch Verschiebung der Signaturfläche 50 in beiden Achsrichtungen $(T, A_i)$ wird diese an die Abtastwerte 52, 53, 54 so angepaßt, daß die Abweichungen zwischen den Abtastwerten 52, 53, 54 und der Signaturfläche 50 ein Minimum annehmen (Minimum der Summe der Quadrate der Abweichungen). An diesem Minimum ergibt sich aus der relativen Lage der Signaturfläche 50 zu den Bezugslinien 55 und 56 der Abtastwerte 52, 53, 54 die exakte zeitliche Position t des Echoimpulses als Verschiebung in Richtung des Zeitmaßstabs T (Abtastrasters 56). Aus der Verschiebung i der Signaturfläche 51 in Richtung der Amplitudenindexachse 55 kann die Amplitude A des optischen Echoimpulses ermittelt werden.

Zur Ermittlung erster Näherungswerte für die Einpassung können zusätzliche Hilfsflächen herangezogen werden, die aus der Signaturfläche 50 abgeleitet sind.

Die beschriebene Einpassung erfolgt sowohl für den Startimpuls als auch für jeden einzelnen zu einem ausgesendeten Sendeimpuls detektierten Echoimpuls. Die Bestimmung der Zielentfernung kann nun auf zweierlei Art erfolgen. Einerseits ergibt sich die Entfernung zum Ziel aus dem Laufzeitunterschied des zum aktuellen Laserimpuls gehörenden Startimpulses 36 und dem jeweiligen Echoimpuls. Durch Bilden der Differenz der jeweils ermittelten Laufzeiten von Echoimpuls und Startimpuls werden etwaige Schwankungen der zeitlichen Lage des Laserpulses gegenüber dem Triggerpuls eliminiert. Unsicherheiten der Einpassung, hervorgerufen durch Amplitudenrauschen der Abtastwerte, addieren sich jedoch quadratisch, was unter der Annahme von gleichen Verhältnissen für Startimpuls und Echoimpuls zu einer Erhöhung des Rauschens der Entfernungsmessung um den Faktor 1,4 führt. Andererseits kann, wenn die zeitliche Lage des Laserimpulses gegenüber dem den Laserimpuls auslösenden Triggerimpuls des Taktgenerators hinreichend konstant ist, die Position des Startpulses durch Mittelung mit hoher Genauigkeit bestimmt werden. In diesem Fall kann eine Messung mit reduziertem Rauschen durch Bezug der zeitlichen Lage des Echoimpulses auf die gemittelte Position des Startimpulses erreicht werden.

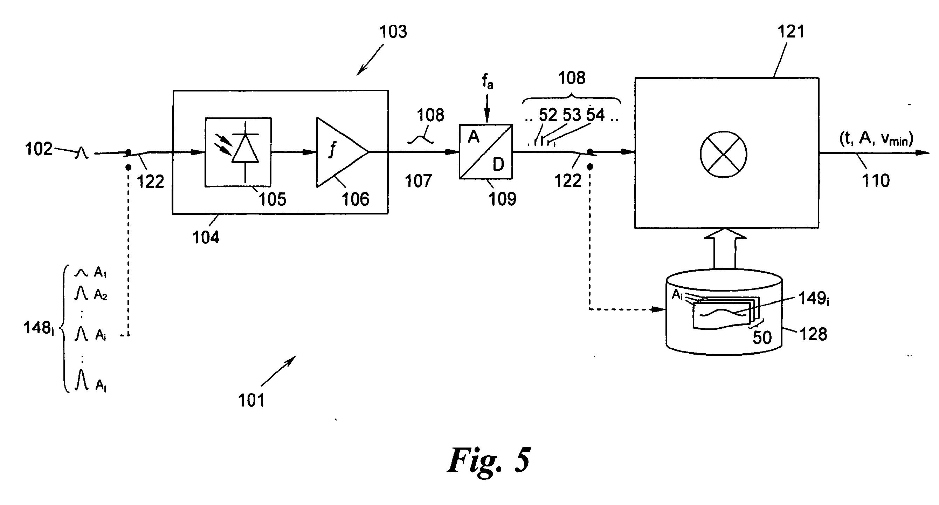

Fig. 5 zeigt eine verallgemeinerte Ausführungsform einer Vorrichtung 101 zum Messen des Empfangszeitpunkts t eines Impulses 102, der in einem Empfangssystem 103 mit einem einzigen Empfangskanal 104 empfangen wird. Das Empfangssystem 103 ist im gezeigten Beispiel ein opto-elektronisches Empfangssystem, der Impuls 102 demgemäß ein optischer Impuls, z.B. ein Laserimpuls, und der Empfangskanal 104 umfaßt eine Photodiode 105.

Es versteht sich, daß das Empfangssystem 103 auch von beliebig anderer als der dargestellten opto-elektronischen Art sein kann, beispielsweise ein Funkempfangssystem für Funk- oder Radar-Impulse, ein akustisches Empfangssystem für akustische Impulse oder Echos, ein Empfangskreis in einem elektronischen System zur Verarbeitung von elektronischen Impulsen, usw.

Der Empfangskanal 104 ist bevorzugt aus analogen Komponenten aufgebaut, um eine möglichst hohe Bandbreite zu erzielen, wie dem Fachmann bekannt. Zur Verarbeitung von Impulsen 102 mit hohem Dynamikumfang besitzt der Empfangskanal 104 ferner bevorzugt ein dynamikkomprimierendes Übertragungsverhalten, hier versinnbildlicht durch einen die Amplitudendynamik des Impulses 102 komprimierenden Verstärker 106. Dadurch tritt am Ausgang 107 des Empfangskanals 104 ein Empfangssignal 108 auf, welches eine dynamikkomprimierte und damit in ihrer Amplitudenform verzerrte Version des Eingangs-Impulses 102 enthält. Allgemein gesprochen kann das Empfangssystem 104 ein beliebiges nichtlineares Übertragungsverhalten haben.

Das Empfangssignal 108 wird in einem Analog/DigitalWandler 109 mit einer Abtastrate $f_a$ von z.B. 500 MSamples/s abgetastet und digitalisiert, z.B. mit einer Bitbreite von 8, 12 oder 16 Bit. Das digitalisierte Empfangssignal 108 besteht aus den obengenannten einzelnen Abtastwerten 52, 53, 54 usw.; seine Abtastwerte werden in ihrer Gesamtheit einfachheithalber weiterhin als Empfangssignal 108 bezeichnet.

Das Empfangssignal 108 wird einer Auswerteeinrichtung 121 zugeführt. Die Auswerteeinrichtung 121 vergleicht das Empfangssignal 108 mit in einem Speicher 128 gespeicherten Referenzsignalen $149_i$, um daraus letztlich den Empfangszeitpunkt t und die Amplitude A des Impulses 102 zu ermitteln und gemeinsam mit einem Qualitätsmaß $V_{min}$ über die Zuverlässigkeit der Meßwerte t, A auf einem Ausgang 110 auszugeben. Bei diesem Vergleich führt die Auswerteeinrichtung 121 die bereits kurz anhand von Fig. 4 erörterte Einpassung des Empfangssignals 108 in eine von den Referenzsignalen $149_i$ aufgespannte Signaturfläche 50 durch, wie später noch ausführlicher erörtert wird.

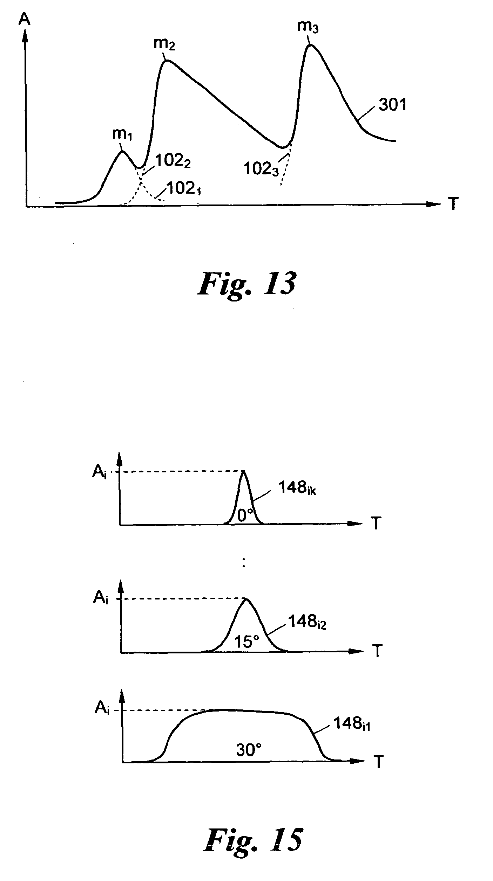

Zunächst wird auf die Erzeugung der Referenzsignale $149_i$ näher eingegangen. Die Referenzsignale $149_i$ sind das Ergebnis eines Trainings- bzw. Kalibrierdurchlaufs von Referenzimpulsen $148_i$ vorgegebener unterschiedlicher Amplitude (bzw. auch unterschiedlicher Impulsform, siehe dazu später ausführlicher anhand von Fig. 15), beispielsweise den optischen Impulsen 48 von Fig. 2, durch die Vorrichtung 101.

Für den Trainingsdurchlauf wird die Vorrichtung 101 über die symbolisch dargestellten Schalter 122 in den mit strichlierten Linien gezeichneten Trainingsmodus versetzt. In diesem Modus werden die Empfangssignale 108 von I verschiedenen Referenzimpulsen $148_i$ (i = 1..I) mit jeweils gleicher (bzw. verschiedener, siehe später) Impulsform, jedoch unterschiedlicher Amplitude $A_i$ jeweils als ein Referenzsignal $149_i$ für eine bestimmte Amplitude $A_i$ im Speicher 128 hinterlegt, und zwar bezogen auf einen gemeinsamen Zeitmaßstab T. Letzteres ist einfach zu bewerkstelligen, weil im Trainingsmodus der Empfangszeitpunkt des Empfangssignals 108 eines Referenzimpulses $148_i$ bekannt ist.

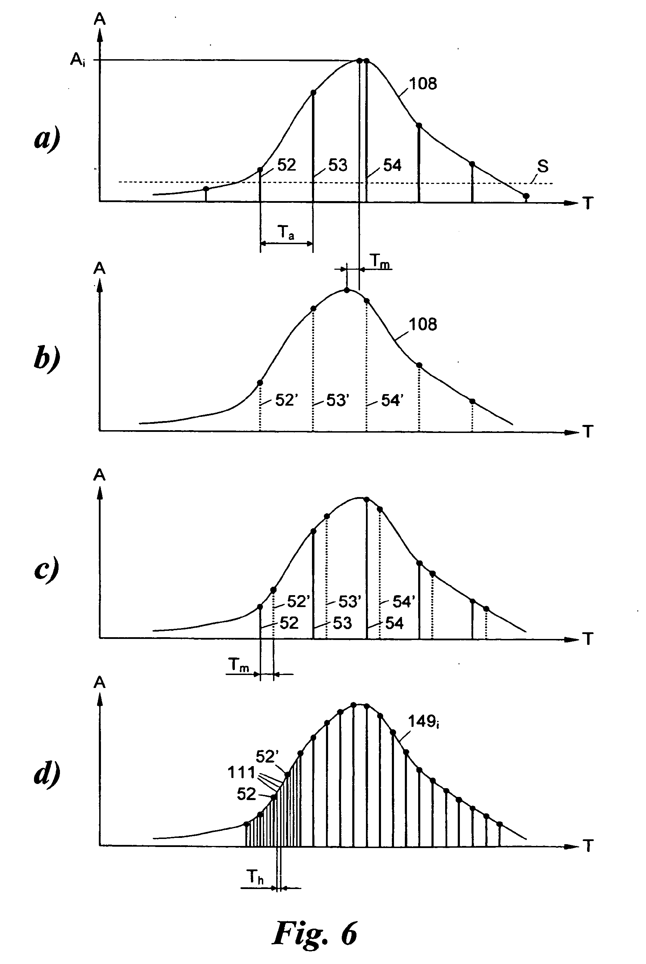

Besonders hervorzuheben ist, daß der Einpaßvorgang der Abtastwerte 52, 53, 54 in die Signaturfläche 50, d.h. der Vergleich des Empfangssignales 108 eines Impulses 102 mit den Referenzsignalen $149_i$, mit einer höheren Zeitauflösung als der Abtastrate $f_a$ durchgeführt werden kann, und zwar indem die Auswerteeinrichtung 121 zwischen den im Speicher 128 hinterlegten Referenzsignalen $149_i$ - sowohl in Amplitudenachsenrichtung i als auch Zeitachsenrichtung T - im laufenden Betrieb ("on-thefly") interpoliert; und/oder indem die Referenzsignale $149_i$ in einer höheren Zeitauflösung des Zeitmaßstabs T im Speicher 128 hinterlegt werden und der Einpaßvorgang in den Auflösungsschritten dieser höheren Zeitauflösung durchgeführt wird. Solche hochaufgelösten Referenzsignale $149_i$ können dennoch mit derselben Vorrichtung 101 gewonnen werden, wie anhand von Fig. 6 kurz erläutert wird.

Fig. 6a zeigt das Empfangssignal 108 eines Referenzimpulses $148_i$ mit vorgegebener Amplitude $A_i$. Das Empfangssignal 108 wird mit einer relativ "geringen" Abtastrate $f_a$ von z.B. 500 MSamples/s abgetastet, um die Abtastwerte 52, 53, 54,... zu erhalten. Diese Abtastrate entspricht einer zeitlichen Auflösung $T_a = 1/f_a$ von 2 ns, was z.B. bei optischen Lichtimpulsen einer Entfernungsauflösung von 60 cm entspricht.

Für die Generierung der Referenzsignale $149_i$ werden bevorzugt nur solche Abtastwerte 52, 53, 54... berücksichtigt, welche einen Amplitudenschwellwert S überschreiten.

Fig. 6b zeigt das Empfangssignal 108 eines gleichartigen Referenzimpulses $148_i$ derselben Amplitude $A_i$, der jedoch um einen vorgegebenen, kleinen Zeitversatz $T_m$ phasenverschoben empfangen wurde. Der Zeitversatz $T_m$ kann beispielsweise durch zeitversetzte Aussendung der Impulse im Sendesystem erreicht werden, z.B. bei der Vorrichtung von Fig. 1 durch Zeitversetzen der Triggerimpulse des Impulsgebers 2, oder auch durch Verändern des Übertragungsweges der Referenzimpulse, z.B. bei optisch reflektierten Impulsen durch Verstellen der Entfernung des Reflexionsziels.

Eine Abtastung des um $T_m$ zeitversetzten Empfangssignals 108 mit derselben Abtastrate $f_a$ erzeugt daher weitere Abtastwerte 52', 53', 54'... zu um $T_m$ versetzten Zeitpunkten (Fig. 6c). Durch Fortschreitendes weiteres Zeitversetzen des Referenzimpulses $148_i$ um $T_m$, bis letztlich der gesamte Zeitbereich $T_a - T_m$ abgedeckt ist, können anschließend alle erhaltenen Abtastwerte 52, 52'... "kämmend", d.h. abwechselnd aufeinanderfolgend, zu einem mit der hohen Zeitauflösung $T_m$ abgetasteten Referenzsignal $149_i$ zusammengesetzt werden, siehe Fig. 6d. In dem gezeigten Beispiel ist $T_m = T_a/4 = 500$ ps.

Fig. 6d zeigt den optionalen weiteren Schritt des Einfügens von Interpolationswerten 111 zwischen die Abtastwerte 52, 52'... des Referenzsignals $149_i$, um eine im Prinzip beliebig feine, lediglich durch Speicher- und Rechenleistung begrenzte besonders hohe Zeitauflösung $T_h$ zu erreichen. Beispielsweise werden jeweils 249 Interpolationswerte 111 zwischen zwei Abtastwerte 52, 52'... eingefügt, so daß die Zeitauflösung $T_h = T_m/250 = 2$ ps beträgt, was einer Abtastrate $f_n$ von 500 GSamples/s entspricht.

Daraus ist ersichtlich, daß bei dem Einpaßvorgang eines Empfangssignales 108 mit niedrig-zeitaufgelösten Abtastwerten 52, 53,... in eine von Referenzsignalen $149_i$ aufgespannte Signaturfläche 50 dennoch ein sehr feinstufiger Vergleich in Richtung des Zeitmaßstabs T in den Auflösungsschritten $T_m$ oder $T_h$ der hochaufgelösten Referenzsignale $149_i$ vorgenommen werden kann, im gezeigten Beispiel mit einer Zeitauflösung von bis zu 2 ps. Dies entspricht z.B. bei Lichtimpulsen einer Entfernungsauflösung von 0,6 mm bzw. bei einem Reflexions-Laser-Entfernungsmesser bzw. -Scanner einer Genauigkeit von 0,6 mm / 2 = 0,3 mm.

Wie zuvor bereits erwähnt, können zwischen die einzelnen real erhaltenen Referenzsignale $149_i$ einer Referenzsignal-Schar bzw. Signaturfläche 50 auch noch weitere durch Interpolation erhaltene Referenzsignale $149_i$ eingefügt werden, so daß die Auflösung einer Signaturfläche 50 auch in Richtung ihres Amplitudenindex $A_i$ - über die Anzahl I der ursprünglich verwendeten Referenzimpulse $148_i$ hinaus - noch wesentlich erhöht werden kann. Die Treffsicherheit der Einpassung eines Empfangssignals 108 in die Signaturfläche 50 und damit die Genauigkeit der Messung können dadurch noch weiter erhöht werden.

Die genannten Inter- bzw. Extrapolationen können auch "onthe-fly" durchgeführt werden, d.h. die Inter- bzw. Extrapolationswerte müssen nicht notwendigerweise im Speicher 128 hinterlegt werden, sondern können auch erst im laufenden Betrieb erzeugt werden.

Eine nochmalige signifikante Steigerung der Treffsicherheit und damit Genauigkeit der Empfangszeitpunktsbestimmung wird mit Hilfe der nun folgend beschriebenen mehrkanaligen Vorrichtungen und Verfahren erreicht.

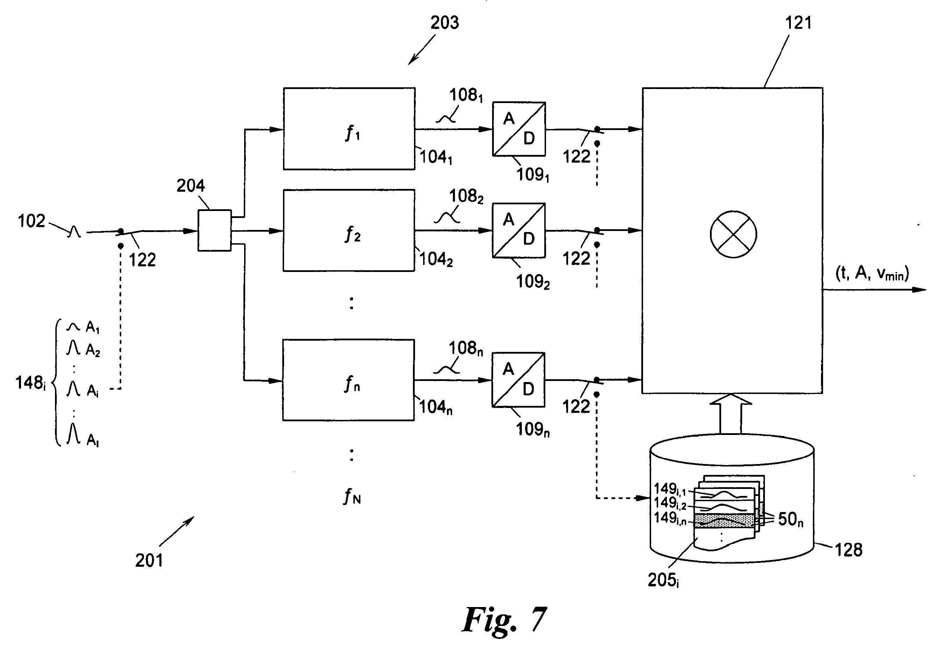

Fig. 7 zeigt eine solche weitere Ausführungsform 201 einer Vorrichtung mit einem mehrkanaligen Empfangssystem 203 zur Verarbeitung von Impulsen 102 von hohem Dynamikumfang.

Das Empfangssystem 203 umfaßt N parallelgeschaltete Empfangskanäle $104_n$ (n = 1..N), denen ein Impuls 102 über einen Signalteiler 204 zeitgleich zugeführt wird. Die am Ausgang der Empfangskanäle $104_n$ erhaltenen Empfangssignale $108_n$ werden über Analog-Digitalwandler $109_n$ der Auswerteeinrichtung 121 zugeführt.

Die Empfangskanäle $104_n$ besitzen jeweils eine unterschiedliche Empfindlichkeit und/oder ein unterschiedliches nichtlineares Übertragungsverhalten, sodaß die Empfangssignale $108_n$ auch jeweils eine unterschiedliche Form haben. Der Satz von Empfangssignalen $108_n$, der für einen Impuls 102 über das Empfangssystem 203 erhalten wird, ist daher charakteristisch für diesen Impuls.

Demgemäß können in dem Trainingsmodus (strichlierte Stellung der symbolischen Schalter 122) für jeden Referenzimpuls $148_i$ mit einer vorgegebenen Amplitude $A_i$ auch jeweils N Empfangssignale $108_n$ empfangen und als Satz $205_i$ von N Referenzsignalen $149_{i,n}$ im Speicher 128 hinterlegt werden. Analog zu Fig. 4 spannen alle I Referenzsignale $149_{i,n}$ eines Empfangskanals $104_n$ jeweils eine der N Signaturflächen $50_n$ auf.

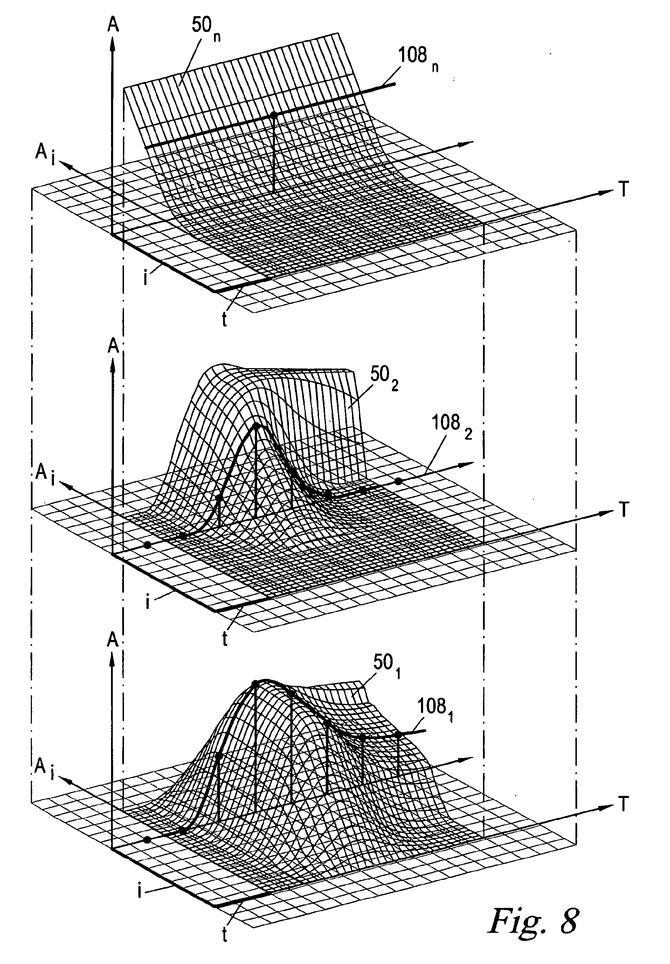

In Fig. 8 ist dargestellt, wie ein Satz von Empfangssignalen $108_n$ eines Impulses 102 gleichzeitig in alle N Signaturflächen $50_n$ durch gemeinsame Verschiebung in Amplitudenindexrichtung $A_i$ und Zeitmaßstabsrichtung T eingepaßt wird. Mit anderen Worten wird der Satz von Empfangssignalen $108_n$ mit jedem der I Referenzsätze $205_i$ verglichen, u. zw. jeweils ein Empfangssignal $108_n$ mit einem Referenzsignal $149_{i,n}$, und so jener Index i und jener Zeitversatz t ermittelt, bei denen die Vergleichsabweichung minimal ist.

Als Maß für die Vergleichsabweichung wird bevorzugt die Summe der quadratischen Abweichung jeweils zwischen einem Empfangssignal $108_n$ und einem Referenzsignal $149_{i,n}$, summiert über alle N Empfangskanäle, herangezogen:

$$v_{i,t} = \sum_{n,k} (s_{k,n} - r_{k-t,i,n})^2$$

mit

$v_{i,t}$ Vergleichsabweichung beim Zeitversatz t und Referenzsatz- bzw. Amplitudenindex-Versatz i zwischen Empfangssignal $108_n$ und Referenzsignal $149_{i,n}$;

$S_{k,n}$ Abtastwert des Empfangssignals $108_n$ zum Zeitpunkt k;

$r_{x-t,i,n}$ Abtastwert des Referenzsignals $149_{i,n}$ zum Zeitpunkt k-t.

Durch Aufsuchen des Minimums von $v_{i,t}$ kann nun der Empfangszeitpunkt t und in der Folge auch die zugehörige Amplitude $A_i$ des Impulses 102 ermittelt werden.

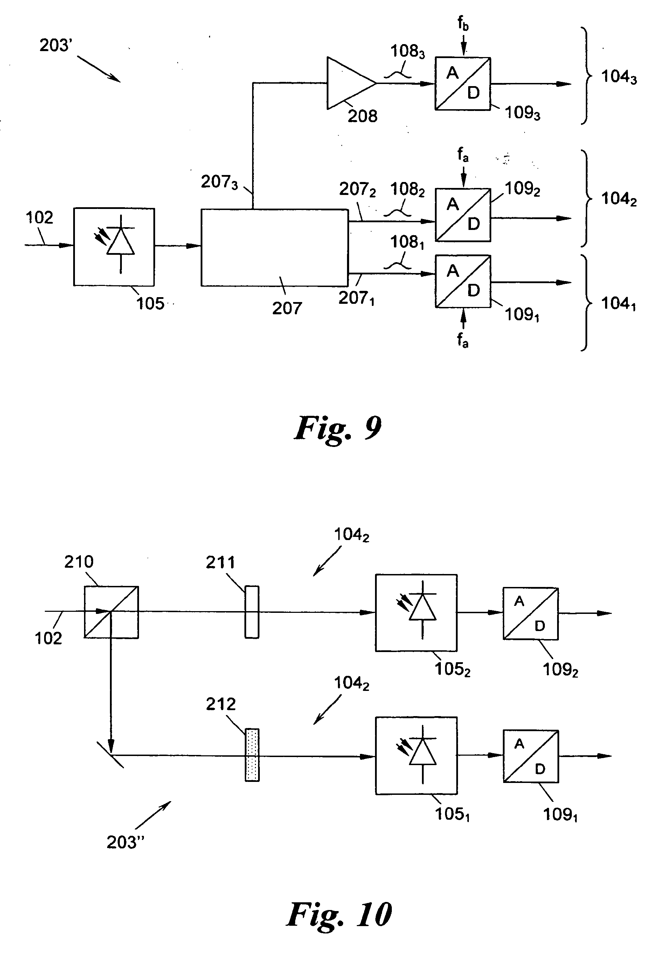

Fig. 8 zeigt in dem obersten dargestellten Kanal n ein Empfangssignal $108_n$, welches für die analysierte Dauer des Impulses 102 hier eine weitgehend konstante Amplitude hat, wie es z.B. aus einem stark integrierenden Empfangskanal $104_n$ und/oder mit einer gegenüber $f_a$ reduzierten Abtastrate $f_b$ erhalten wird. Fig. 9 zeigt ein Beispiel eines Empfangssystems 203', das zwei unterschiedlich dynamikkomprimierende Empfangskanäle $104_1$, $104_2$ und einen solchen integrierenden, "langsamen" Empfangskanal $104_3$ hat. Eine Photodiode 105 empfängt den optischen Impuls 102. Der Ausgang der Photodiode 105 ist auf einen Verstärker 207 mit zwei Ausgängen $207_1$, $207_2$ geführt, welche Empfangssignale $108_1$ und $108_2$ mit unterschiedlicher Dynamikkompression liefern.

An einem Abgriff $207_3$ des Verstärkers 207 stellt dieser ein Signal zur Verfügung, welches einen seiner aktuellen Betriebszustände anzeigt, z.B. seine aktuelle Ladungs- oder Stromaufnahme, seine Betriebstemperatur usw., und welches Signal einem Anpaßverstärker 208 zugeführt wird. Das Signal auf dem Abgriff $207_3$ kann somit einerseits als ein "weiteres Empfangssignal" $108_3$ betrachtet werden, da es ebenfalls auf den Impuls 102 zurückzuführen ist; anderseits ist es aber auch ein Signal über den Betriebszustand des Empfangssystems 203' selbst.

Das weitere Empfangssignal $108_3$ hat im gezeigten Beispiel ein relativ langsames Zeitverhalten, sodaß es kostengünstig mit einem Analog/Digital-Wandler $109_3$ mit besonders geringer Abtastrate $f_b$ digitalisiert werden kann.

Alternativ könnten auch noch weitere Betriebszustände der geschilderten Empfangssysteme 103, 203, 203' als weitere Empfangssignale $108_3$ ermittelt und wie die anderen "normalen" Empfangssignale $108_n$ in die Signaturflächenanpassung einbezogen werden.

Bei den bisher gezeigten Ausführungsformen von mehrkanaligen Empfangssystemen erfolgte die Aufteilung des Impulses 102 auf die verschiedenen Empfangskanäle $104_n$ auf elektrischem Wege. Alternativ ist es in opto-elektrischen Systemen wie LaserEntfernungsmessern oder -Scannern auch möglich, den Impuls 102 auf optischem Wege auf die Empfangskanäle aufzuteilen, beispielsweise mit Hilfe eines optischen Strahlteilerwürfels 210 in einem opto-elektrischen Empfangssystem 203", wie in Fig. 10 gezeigt. Eine unterschiedliche Empfindlichkeit und/oder NichtLinearität der Empfangskanäle $104_n$ kann dabei auch durch optische Komponenten erreicht werden, z.B. durch Einfügen von unterschiedlich abschwächenden optischen Filtern 211, 212 in den Strahlengang.

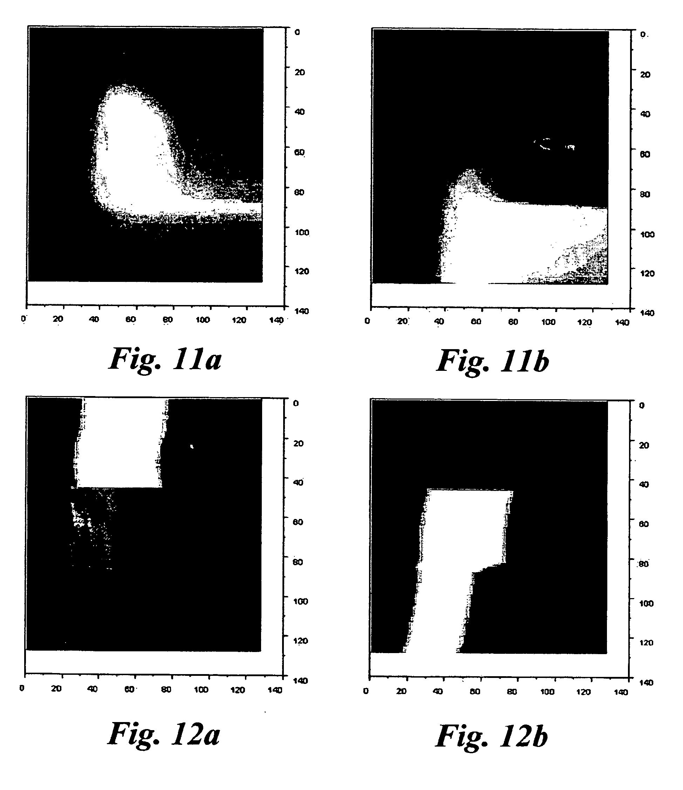

Die Fig. 11 und 12 zeigen die Verwendung von Gewichtungswerten bei der Bestimmung der Vergleichsabweichung $v_{i,t}$ in den Vergleichsschritten der Fig. 4 und 8. Die Fig. 11a und 11b sind Draufsichten auf die Signaturflächen $50_1$ und $50_2$ des ersten und zweiten Kanals von Fig. 8, wobei die Helligkeit der Graustufendarstellung den Amplitudenwert der Signaturfläche angibt.

Die Fig. 12a und 12b zeigen - in derselben Darstellungsart - "Gewichtungsflächen" aus Gewichtungsfaktoren g, die den einzelnen Werten der Signaturflächen $50_1$, $50_2$ der Fig. 11a und 11b zugewiesen und für die Bestimmung einer gewichteten Vergleichsabweichung $v'_{i,t}$ gemäß

$$v'_{i,t} = \sum_{n,k} g \left( s_{k,n} - v_{k-t,j,n} \right)^2$$

herangezogen werden können.

In den Fig. 12a und 12b zeigen helle Werte höhere Gewichtungsfaktoren g an als dunkle Werte; Schwarz zeigt z.B. einen Gewichtungsfaktor g von Null, Weiß einen Gewichtungsfaktor g von 1 und Grau einen Gewichtsfaktor g von 0,5 an. Auf diese Weise können bestimmte Bereiche der Signaturflächen $50_n$ z.B. zur Rechenzeitverkürzung ausgeblendet (g = 0) oder ihnen eine besondere Signifikanz (g = 1) zugewiesen werden.

Alle zuvor im Zusammenhang mit den Fig. 1 bis 12 erörterten Prinzipien können nun auch zum Messen der Empfangszeitpunkte - und in weiterer Folge auch Amplituden - von zwei oder mehreren sich zumindest teilweise überlagernden Impulsen eingesetzt werden. Fig. 13 zeigt beispielhaft eine Gruppe von drei zeitlich so knapp aufeinanderfolgenden Empfangsimpulsen $102_1$, $102_2$ und $102_3$ (allgemein $102_j$), daß sie sich im Empfangssignal 108 zu einem einzigen Impulsverlauf 301 ("Impulsgruppe") mit z.B. drei Maxima $m_1$, $m_2$, $m_3$ überlagern.

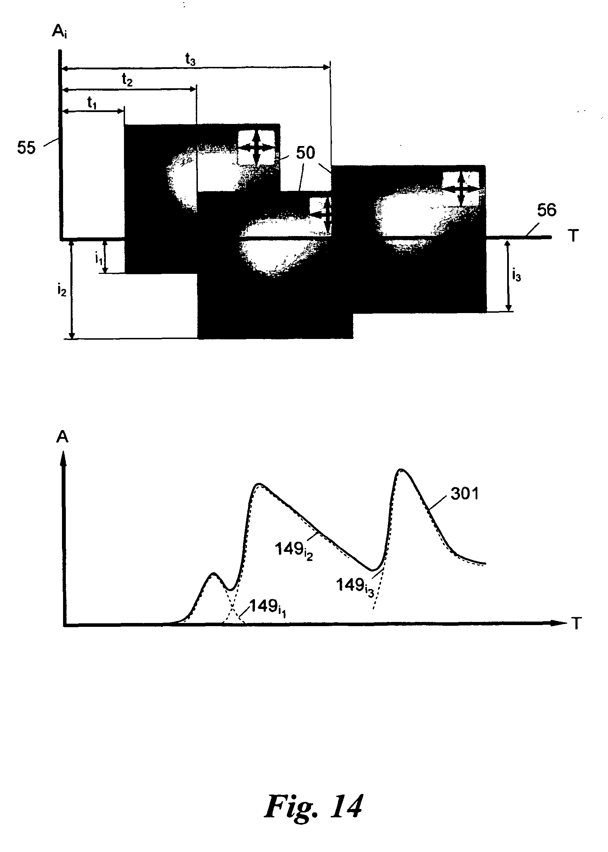

Gemäß Fig. 14 werden durch Kombinieren von zwei oder mehreren, hier drei sich unter jeweiligen Zeitversätzen $t_1$, $t_2$, $t_3$ (allgemein $t_j$) überlagernden Referenzsignalen $149_{i1}$, $149_{i2}$ und $149_{i3}$ (allgemein $149_{ij}$) aus der Referenzsignalschar der Signaturfläche 50 und entsprechendes Variieren des jeweiligen Zeitversatzes $t_j$ und Amplitudenindex $i_j$ in der Auswerteeinrichtung 121 jene drei Referenzssignale $149_{i1}$, $149_{i2}$ und $149_{i3}$ und Zeitversätze $t_1$, $t_2$ und $t_3$ ermittelt, bei denen die Vergleichsabweichung $V_{i1, t1; i2, t2; i3, t3}$ (bzw. v') zwischen der Impulsgruppe 301 des Empfangssignals 108 und der Überlagerung der Referenzsignale minimal ist.

Dies ist gleichbedeutend mit der Betrachtungsweise, mehrere Signaturflächen 50 einander zumindest teilweise zu überlagern und dabei solange in Zeitachsenrichtung T und in Amplitudenindexrichtung $A_i$ zu verschieben, bis sie optimal in die Impulsgruppe 301 "eingepaßt" sind, d.h. diese mit minimaler Vergleichsabweichung annähern. Fig. 14 zeigt dies schematisch in Form einer Draufsicht auf die drei Signaturflächen 50 (Darstellungsart analog der Fig. 11). An der Bezugslinie 56 lassen sich die drei die Impulsgruppe 301 optimal annähernden Referenzsignale $149_{ij}$ mit ihren jeweiligen Amplituden in dieses $i_j$ und ihren jeweiligen Zeitversätzen $t_j$ zur Bezugslinie 55 ablesen. Die so ermittelten Zeitversätze $t_j$ und Amplituden $A_{ij}$ geben die Empfangszeitpunkte und Amplituden der Empfangsimpulse $102_j$ an.

In gleicher Weise läßt sich dieses Konzept auf die auf n Dynamikkanäle $104_n$ aufgeteilte Ausführungsform der Fig. 7 bis 10 erweitern, indem jede in Fig. 14 in der Draufsicht gezeigte Signaturfläche 50 jeweils ein "Stapel" von kanalbezogenen Signaturflächen $50_n$ gemäß Fig. 8 ist. Die j *Stapel* von Signaturflächen $50_n$ werden dann - analog den einzelnen Signaturflächen 50 von Fig. 14 - solange in Amplitudenindexrichtung $A_i$ und Zeitachsenrichtung T verschoben bzw. justiert, bis die Summe aller (optional gewichteten) Vergleichsabweichungen aus den verschiedenen Kanälen minimal ist.

Die bisher vorgestellten Lösungen zur Entfernungsmessung mittels Laufzeitmessungen an reflektierten Impulsen gingen von einem oder mehreren im Strahlquerschnitt eines ausgesandten Impulses liegenden diskreten Zielen ("Punktzielen") mit jeweils eindeutiger Entfernung aus. Eine weitere Verallgemeinerung der hier vorgestellten Lösungen besteht in der Berücksichtigung von sog. "Flächenzielen", deren Normalvektor nicht parallel zur Strahlrichtung verläuft und die damit zu einer Verbreitung bzw. Verformung des Empfangsimpulses führen. Aus dem Ausmaß der Verbreitung bzw. der Art der Verformung des Impulses kann hier z.B. auf die Neigung oder Oberflächenstruktur eines Ziels geschlossen werden.

Eine weitere Verallgemeinerung der hier vorgestellten Konzepte besteht demgemäß darin, daß die Referenzsignale $149_i$, $149_{i,n}$ auch auf Referenzimpulse unterschiedlicher Impulsform zurückgehen können. Fig. 15 zeigt ein Beispiel von Referenzimpulsen $148_{i1}$, $148_{i2}$... (allgemein $148_{ik}$), welche für ein und denselben Amplitudenwert $A_i$ unterschiedliche Impulsformen einnehmen, wie sie beispielsweise aus Reflexionen an unterschiedlich geneigten (hier: 0°, 15° und 30°) diffus reflektierenden Flächenzielen erhaltbar sind. Durch Ermitteln der passenden Referenzsignale $148_{ik}$ mit der minimalen Vergleichsabweichung v bzw. v' in der zuvor beschriebenen Weise können so nicht nur die Empfangszeitpunkte und Amplituden der Impulse im Empfangssignal bestimmt werden, sondern auch deren Impulsform und damit impulsformende Eigenschaften des Ziel, wie seine Neigung zur Strahlrichtung und/oder seine Oberflächenstruktur.

Die Erfindung ist nicht auf die dargestellten Ausführungsformen beschränkt, sondern umfaßt alle Varianten und Modifikationen, die in den Rahmen der angeschlossenen Ansprüche fallen.

**Patentansprüche**

1. Vorrichtung (101, 201) zum Messen der Empfangszeitpunkte ($t_j$) von sich zumindest teilweise überlagernden Impulsen ($102_j$) in einem Empfangssystem (6 - 8, 103, 203, 203', 203"), das zumindest einen Empfangskanal (6 - 8, 104) mit nicht-linearem Übertragungsverhalten enthält, welcher an seinem Ausgang (10, 107) ein Empfangssignal (108) liefert, **gekennzeichnet durch**
einen Speicher (28, 128), in dem die Empfangssignale von Referenzimpulsen ($148_i$) vorgegebener unterschiedlicher Amplitude ($A_i$) als Referenzsignale ($149_i$) bezogen auf einen Zeitmaßstab (T) vorliegen, und
eine an das Empfangssystem und den Speicher angeschlossene Auswerteeinrichtung (21, 121), welche ein Empfangssignal (108) mit zumindest zwei einander überlagerten Referenzsignalen ($149_{ij}$) unter jeweils variierendem Zeitversatz ($t_j$) vergleicht, um jene Referenzsignale ($149_{ij}$) und Zeitversätze ($t_j$) zu ermitteln, bei denen die Vergleichsabweichung (v, v') minimal ist, und diese Zeitversätze als Empfangszeitpunkte ($t_j$) bezüglich des Zeitmaßstabs (T) ausgibt.

2. Vorrichtung (201) zum Messen der Empfangszeitpunkte ($t_j$) von sich zumindest teilweise überlagernden Impulsen ($102_j$) hohen Dynamikumfangs in einem Empfangssystem (203, 203', 203"), das zumindest zwei parallele Empfangskanäle ($104_n$) mit unterschiedlicher Empfindlichkeit enthält, welche an ihren Ausgängen ($207_n$) einen Satz zeitparalleler Empfangssignale ($108_n$) liefern, **gekennzeichnet durch**
einen Speicher (128), in dem die Sätze von Empfangssignalen von Referenzimpulsen ($148_i$) vorgegebener unterschiedlicher Amplitude ($A_i$) als Referenzsätze ($205_i$) bezogen auf einen Zeitmaßstab (T) vorliegen, und
eine an das Empfangssystem (203, 203', 203") und den Speicher (128) angeschlossene Auswerteeinrichtung (121), welche einen Satz von Empfangssignalen ($108_n$) mit zumindest zwei einander kanalweise überlagerten Referenzsätzen ($205_{ij}$) unter jeweils variierendem Zeitversatz ($t_j$) vergleicht, um jene Referenzsätze ($205_{ij}$) und Zeitversätze ($t_j$) zu ermitteln, bei denen die Vergleichsabweichung (v, v') minimal ist, und diese Zeitversätze als Empfangszeitpunkte ($t_j$) bezüglich des Zeitmaßstabs (T) ausgibt.

3. Vorrichtung nach Anspruch 1 oder 2, **dadurch gekennzeichnet, daß** der bzw. die Empfangskanäle (6 - 8, 104, $104_n$) analoger Art und der Speicher (28, 128) und die Auswerteeinrichtung (21, 121) digitaler Art sind, wobei am Ausgang jedes Empfangskanals (6 - 8, 104, $104_n$) ein Analog/Digital-Wandler (9, 109, $109_n$) liegt.

4. Vorrichtung nach Anspruch 3, **dadurch gekennzeichnet, daß** die Referenzsignale ($149_i$) bzw. Referenzsätze ($205_i$) in dem Speicher (28, 128) in einer hohen ersten Zeitauflösung ($T_m$, $T_h$) vorliegen, daß das bzw. die Empfangssignale (108, $108_n$) eines Impulses (102) mit einer geringen zweiten Zeitauflösung ($T_a$) abgetastet sind, und
daß die Auswerteeinrichtung (21, 121) die Zeitversätze ($t_j$) in den Auflösungsschritten ($T_m$, $T_h$) der hohen ersten Zeitauflösung ($T_m$, $T_h$), bevorzugt durch Interpolation zwischen diesen noch feiner, variiert.

5. Vorrichtung nach einem der Ansprüche 1 bis 4 zum zusätzlichen Messen der Amplituden ($A_j$) der Impulse ($102_j$), **dadurch gekennzeichnet, daß** der Speicher (28, 128) zu jedem Referenzsignal ($149_i$) bzw. Referenzsatz ($205_i$) auch die Amplitude ($A_i$) des zugehörigen Referenzimpulses ($148_i$) enthält und die Auswerteeinrichtung (21, 121) die Amplituden ($A_j$) jener Referenzimpulse ($148_i$), welche zu den ermittelten Referenzsignalen ($149_{ij}$) bzw. Referenzsätzen ($205_{ij}$) gehören, als Amplituden ($A_j$) der Impulse ($102_j$) ausgibt.

6. Vorrichtung nach einem der Ansprüche 1 bis 5, **dadurch gekennzeichnet, daß** die Auswerteeinrichtung (21, 121) für die gemessenen Empfangszeitpunkte ($t_j$) auch die zugehörige Vergleichsabweichung (v, v') als Qualitätsmaß der Messung ausgibt.

7. Vorrichtung nach einem der Ansprüche 1 bis 6, **dadurch gekennzeichnet, daß** sie zumindest einen Sensor (206, 208) enthält, welcher einen Betriebszustand eines oder mehrerer Empfangskanäle ($104_3$) mißt und an seinem Ausgang ($207_3$) gleichsam als weiteres Empfangssignal ($108_3$) bereitstellt, daß der Speicher (128) solch weitere Empfangssignale ($108_3$) der Referenzimpulse ($148_i$) als weitere Referenzsignale ($149_i$, $149_{i,n}$) enthält, und
daß die Auswerteeinrichtung (21, 121) bei dem genannten Vergleich auch ein solch weiteres Empfangssignal ($108_3$) mit den weiteren Referenzsignalen ($149_i$, $149_{i,n}$) vergleicht und in die Ermittlung der Vergleichsabweichung (v, v') einbezieht.

8. Vorrichtung nach einem der Ansprüche 1 bis 7, **dadurch gekennzeichnet, daß** sie zumindest einen Sensor enthält, welcher die Betriebstemperatur eines oder mehrerer Empfangskanäle (6 - 8, 104, $104_n$) mißt,

daß der Speicher (25-28, 128) Referenzsignale $(149_i)$ bzw. Referenzsätze $(205_i)$ für verschiedene Betriebstemperaturen $(T_1, T_2)$ enthält, und
daß die Auswerteeinrichtung daraus die für die jeweils aktuelle Betriebstemperatur gültigen Referenzsignale $(149_i)$ bzw. Referenzsätze $(205_i)$ ermittelt, erforderlichenfalls durch Inter- oder Extrapolation, und bei dem genannten Vergleich verwendet.

9. Vorrichtung nach einem der Ansprüche 1 bis 8, **dadurch gekennzeichnet, daß** der Speicher (28, 128) ferner Gewichtungswerte (g) für die Referenzsignale $(149_i)$ bzw. Referenzsätze $(205_i)$ enthält, welche in die Ermittlung der minimalen Vergleichsabweichung (v, v') Eingang finden.

10. Vorrichtung nach einem der Ansprüche 1 bis 9, **dadurch gekennzeichnet, daß** die Referenzsignale $(149i, 149_{i,n})$ auch von Referenzimpulsen $(148_{ik})$ unterschiedlicher Impulsform stammen.

11. Verfahren zum Messen der Empfangszeitpunkte $(t_j)$ von sich zumindest teilweise überlagernden Impulsen $(102_j)$ in einem Empfangssystem (6 - 8, 103, 203, 203', 203"), das zumindest einen Empfangskanal (6 - 8, 104) mit nicht-linearem Übertragungsverhalten enthält, welcher an seinem Ausgang (10, 107) ein Empfangssignal (108) liefert, **gekennzeichnet durch** die Schritte
Zurverfügungstellen der Empfangssignale von Referenzimpulsen $(148_i)$ vorgegebener unterschiedlicher Amplitude $(A_i)$ als Referenzsignale $(149_i)$ bezogen auf einen Zeitmaßstab (T),
Vergleichen eines Empfangssignals (108) mit zumindest zwei einander überlagerten Referenzsignalen $(149_{ij})$ unter jeweils variierendem Zeitversatz $(t_j)$, um jene Referenzsignale $(148_{ij})$ und Zeitversätze $(t_j)$ zu ermitteln, bei denen die Vergleichsabweichung (v, v') minimal ist, und
Ausgeben dieser Zeitversätze als Empfangszeitpunkte $(t_j)$ bezüglich des Zeitmaßstabs (T).

12. Verfahren zum Messen der Empfangszeitpunkte $(t_j)$ von sich zumindest teilweise überlagernden Impulsen $(102_j)$ hohen Dynamikumfangs in einem Empfangssystem (203, 203', 203"), das zumindest zwei parallele Empfangskanäle $(104_n)$ mit unterschiedlicher Empfindlichkeit enthält, welche an ihren Ausgängen $(207_n)$ einen Satz zeitparalleler Empfangssignale $(108_n)$ liefern, **gekennzeichnet durch** die Schritte
Zurverfügungstellen der Sätze von Empfangssignalen von Referenzimpulsen $(148_i)$ vorgegebener unterschiedlicher Amplitude $(A_i)$ als Referenzsätze $(205_i)$ bezogen auf einen Zeitmaßstab (T),
Vergleichen eines Satzes von Empfangssignalen $(108_n)$ mit zumindest zwei einander kanalweise überlagerten Referenzsätzen $(205_{ij})$ unter jeweils variierendem Zeitversatz $(t_j)$, um jene Referenzsätze $(205_{ij})$ und Zeitversätze $(t_j)$ zu ermitteln, bei denen die Vergleichsabweichung (v, v') minimal ist, und Ausgeben dieser Zeitversätze als Empfangszeitpunkte $(t_j)$ bezüglich des Zeitmaßstabs (T).

13. Verfahren nach Anspruch 11 oder 12, **dadurch gekennzeichnet,**
**daß** die Referenzsignale $(149_i)$ bzw. Referenzsätze $(205_i)$ in einer hohen ersten Zeitauflösung $(T_m, T_h)$ zur Verfügung gestellt werden,
**daß** das bzw. die Empfangssignale $(108, 108_n)$ mit einer geringen zweiten Zeitauflösung $(T_a)$ abgetastet werden, und
**daß** beim Vergleichen die Zeitversätze (t) in den Auflösungsschritten $(T_m, T_h)$ der hohen ersten Zeitauflösung $(T_m, T_h)$, bevorzugt zusätzlich verfeinert durch Interpolation, variiert werden.

14. Verfahren nach Anspruch 13, **dadurch gekennzeichnet, daß** ein zur Verfügung gestelltes Referenzsignal $(149_i, 149_{i,n})$ erzeugt wird, indem mehrere gleichartige und in den Auflösungsschritten einer hohen Zeitauflösung $(T_m)$ zeitversetzte Referenzimpulse $(148_i)$ verwendet werden, deren Empfangssignale (108) mit einer geringen Zeitauflösung $(T_a)$ abgetastet und kämmend zum Referenzsignal $(149_i)$ zusammengesetzt werden.

15. Verfahren nach Anspruch 14, **dadurch gekennzeichnet, daß** das zusammengesetzte Referenzsignal $(149_i)$ durch Einfügen von Interpolationswerten (111) auf eine noch höhere Zeitauflösung $(T_h)$ gebracht wird.

16. Verfahren nach einem der Ansprüche 13 bis 15, **dadurch gekennzeichnet, daß** die erste Zeitauflösung $(T_m, T_h)$ in der Größenordnung von Pikosekunden und die zweite Zeitauflösung $(T_a)$ in der Größenordnung von Nanosekunden liegt.

17. Verfahren nach einem der Ansprüche 11 bis 16 zum Messen der Laufzeiten eines Impulses $(102_j)$ von einem Sendesystem (2-5) über verschiedene Wege zu einem Empfangssystem (6 - 8, 103, 203, 203', 203"), **dadurch gekennzeichnet, daß** der Zeitmaßstab (T) auf den Absendezeitpunkt des Impulses $(102_j)$ vom Sendesystem (2 - 5) bezogen wird, um aus den Zeitversätzen $(t_j)$ die Laufzeiten zu erhalten.

18. Verfahren nach einem der Ansprüche 11 bis 17 zum zusätzlichen Messen der Amplituden $(A_j)$ der Impulse $(102_j)$, **dadurch gekennzeichnet,**
**daß** zu jedem Referenzsignal $(149_i)$ bzw. Referenzsatz $(205_i)$ auch die Amplitude $(A_i)$ des zugehörigen Referenzimpulses $(148_i)$ zur Verfügung gestellt wird, und

**daß** die Amplituden ($A_i$) jener Referenzimpulse ($198_i$), welche zu den ermittelten Referenzsignalen ($149_{ij}$) bzw. Referenzsätzen ($205_{ij}$) gehören, als Amplituden ($A_j$) der Impulse ($102_j$) ausgegeben werden.

19. Verfahren nach einem der Ansprüche 11 bis 18, **dadurch gekennzeichnet, daß** für den Impuls ($102_j$) zumindest ein weiteres Empfangssignal ($108_3$) aus einem Betriebszustand zumindest eines Empfangskanals ($108_3$) gewonnen, mit weiteren auf diese Weise zuvor für Referenzimpulse ($148_i$) gewonnenen Referenzsignalen ($149_i$, $149_{i\cdot n}$) verglichen und in die Ermittlung der Vergleichsabweichung (v, v') einbezogen wird.

20. Verfahren nach einem der Ansprüche 11 bis 19, **dadurch gekennzeichnet, daß** Referenzsignale ($149_i$) bzw. Referenzsätze ($205_i$) für verschiedene Betriebstemperaturen ($T_i$, $T_2$) zur Verfügung gestellt und daraus die für die jeweils aktuelle Betriebstemperatur gültigen Referenzsignale ($149_i$) bzw. Referenzsätze ($205_i$), erforderlichenfalls durch Inter- oder Extrapolation, ermittelt werden.

21. Verfahren nach einem der Ansprüche 11 bis 20, **dadurch gekennzeichnet, daß** die Ermittlung der minimalen Vergleichsabweichung (v, v') mittels eines Least-Squares-Verfahren erfolgt, in welches vorgebbare Gewichtungswerte (g) für die Referenzsignale ($149_i$) bzw. Referenzsätze ($205_i$) Eingang finden.

22. Verfahren nach einem der Ansprüche 11 bis 21, **dadurch gekennzeichnet, daß** die Referenzsignale ($149_i$, $149_{i\cdot n}$) auch von Referenzimpulsen ($148_{ik}$) unterschiedlicher Impulsform stammen.

**Claims**

1. Device (101, 201) for measuring the reception times ($t_j$) of at least partially overlapping pulses (102j) in a reception system (6-8, 103, 203, 203', 203") containing at least one reception channel (6-8, 104) with nonlinear transmission behavior that supplies a reception signal (108) at its output (10, 107), **characterized by**
a memory (28, 128), in which the reception signals of reference pulses ($148_i$) of predetermined different amplitudes ($A_i$) are present as reference signals ($149_i$) relative to a time standard (T), and
an evaluation device (21, 121) that is connected to the reception system and the memory and compares an input signal (108) to at least two superimposed reference signals ($149_{ij}$) with respectively varying time offset ($t_j$) in order to determine those reference signals ($149_{ij}$) and time offsets ($t_j$) at which the comparative deviation (v, v') is minimal, and outputs these time offsets as reception times ($t_j$) relative to the time standard (T).

2. Device (201) for measuring reception times ($t_j$) of at least partially overlapping pulses ($102_j$) of high dynamic range in a reception system (203, 203', 203") containing at least two parallel reception channels ($104_n$) with different sensitivities that supply a set of time-parallel reception signals ($108_n$) at their outputs ($207_n$), **characterized by**
a memory (128), in which the sets of reception signals of reference pulses ($148_i$) of predetermined different amplitudes ($A_i$) are present as reference sets ($205_i$) relative to a time standard (T), and
an evaluation device (121) that is connected to the reception system (203, 203', 203 ") and the memory (128) and compares a set of reception signals ($108_n$) to at least two different channel-wise superimposed reference sets ($205_{ij}$) at respectively varying time offsets ($t_j$), in order to determine those reference sets ($205_{ij}$) and time offsets ($t_j$) at which the comparative deviation (v, v') is minimal, and outputs these time offsets as reception times ($t_j$) relative to the time standard (T).

3. Device according to Claim 1 or 2, **characterized in that** the reception channel(s) (6-8, 104, $104_n$) are of analog type and the memory (28, 128) and evaluation device (21, 121) are of digital type, wherein an analog/digital converter (9, 109, $109_n$) is present at the output of each reception channel (6-8, 104, $104_n$).

4. Device according to Claim 3, **characterized in that** the reference signals ($149_i$) or reference sets ($205_i$) are present in the memory (28, 128) in a first, high time resolution ($T_m$, $T_h$),
**in that** the reception signal(s) (108, $108_n$) of a pulse (102) are scanned with a second, low time resolution ($T_a$), and
**in that** the evaluation device (21, 121) varies the time offsets ($t_j$) in the resolution steps ($T_m$, $T_h$) of the high, first time resolution ($T_m$, $T_h$), preferably by finer interpretation between the two.

5. Device according to one of Claims 1 to 4 for additional measurement of the amplitudes ($A_j$) of the pulses ($102_j$), **characterized in that**, for each reference signal ($149_i$) or reference set ($205_i$), the memory (28, 128) also contains the amplitude ($A_j$) of the associated reference pulse ($148_i$), and the evaluation device (21, 121) outputs the amplitudes ($A_j$) of those reference pulses ($148_i$) that belong to the determined reference signals ($149_{ij}$) or reference sets ($205_{ij}$) as the amplitudes ($A_j$) of the pulses ($102_j$).

6. Device according to one of Claims 1 to 5, **characterized in that** the evaluation unit (21, 121) also evaluates the associated comparative deviation (v, v') for the measured reception times ($t_j$) as a quality measure of the measurement.

7. Device according to one of Claims 1 to 6, **characterized in that** it contains at least one sensor (206, 208) that measures an operating state of one or more reception channels ($104_3$) and provides it as an additional reception signal ($108_3$) at its output ($207_3$),
**in that** the memory (128) contains such additional reception signals ($108_3$) of the reference pulses ($148_i$) as additional reference signals ($149_i$, $149_{i,n}$), and
**in that** the evaluation device (21, 121) also compares such an additional reception signal ($108_3$) to the additional reference signals ($149_i$, $149_{i,n}$) in the above-mentioned comparison, and incorporates this into the determination of the comparative deviation (v, v').

8. Device according to one of Claims 1 to 7, **characterized in that** it contains at least one sensor that measures the operating temperature of one or more reception channels (6-8, 104, $104_n$),
**in that** the memory (25-28, 128) contains reference signals ($149_i$) or reference sets ($205_i$) for different operating temperatures ($T_1$, $T_2$), and
**in that** the evaluation device determines therefrom the reference signals ($149_i$) or reference sets ($205_i$), by interpolation or extrapolation if necessary, and uses them in the above-mentioned comparison.

9. Device according to one of Claims 1 to 8, **characterized in that** the memory (28, 128) further contains weighting values (g) for the reference signals ($149_i$) or reference sets ($205_i$), which enter into the determination of the minimum comparative deviation (v, v').

10. Device according to one of Claims 1 to 9, **characterized in that** the reference signals ($149_i$, $149_{i,n}$) also originate from reference pulses ($148_{ik}$) of different pulse shape.

11. Method for measuring the reception times ($t_j$) of at least partially overlapping pulses ($102_j$) in a reception system (6-8, 103, 203, 203', 203") containing at least one reception channel (6-8, 104) with nonlinear transmission behavior that supplies a reception signal (108) at its output (10, 107), **characterized by** the steps
providing the reception signals of reference pulses ($148_i$) of predetermined different amplitudes ($A_i$) as reference signals ($149_i$) relative to a time standard (T),
comparing a reception signal (108) to at least two different superimposed reference signals ($149_{ij}$) at respectively varying time offsets ($t_j$), in order to determine those reference signals ($148_{ij}$) and time offsets ($t_j$) at which the comparative deviation (v, v') is minimal, and
outputting these time offsets as reception times ($t_j$) relative to the time standard (T).

12. Method for measuring reception times ($t_j$) of at least partially overlapping pulses ($102_j$) of high dynamic range in a reception system (203, 203', 203") containing at least two parallel reception channels ($104_n$) with different sensitivity that supply a set of time-parallel reception signals ($108_n$) at their outputs ($207_n$), **characterized by** the steps
providing the sets of reception signals of reference pulses ($148_i$) of predetermined different amplitudes ($A_i$) as reference sets ($205_i$) relative to a time standard (T),
comparing a set of reception signals ($108_n$) to at least two different channel-wise superimposed reference sets ($205_{ij}$) at respectively varying time offsets ($t_j$), in order to determine those reference sets ($205_{ij}$) and time offsets ($t_j$) at which the comparative deviation (v, v') is minimal, and
outputting these time offsets as reception times ($t_j$) relative to the time standard (T).

13. Method according to Claim 11 or 12, **characterized in that**
the reference signals ($149_i$) or reference sets ($205_i$) are provided in a first, high time resolution ($T_m$, $T_h$),
**in that** the reception signal(s) (108, $108_n$) are sampled with a second, low time resolution ($T_a$), and
**in that** the time offsets (t) in the resolution steps ($T_m$, $T_h$) of the high first time resolution ($T_m$, $T_h$), preferably further refined by interpolation, are varied in the comparison.

14. Method according to Claim 13, **characterized in that** a reference signal ($149_i$, $149_{i,n}$) is generated by using several identical reference pulses ($148_i$), time-offset in the resolution steps of a high time resolution ($T_m$), the reception signals (108) of which pulses are scanned with a low time resolution ($T_a$) and combined in a meshing manner into the reference signal ($149_i$).

15. Method according to Claim 14, **characterized in that** the composed reference signal ($149_i$) is brought to an even higher time resolution ($T_h$) by inserting interpolation values (111).

16. Method according to one of Claims 13 to 15, **characterized in that** the first time resolution ($T_m$, $T_h$) is on the order of picoseconds and the second time resolution ($T_a$) is on the order of nanoseconds.

17. Method according to one of Claims 11 to 16 for measuring the transit times of a pulse ($102_j$) of a transmis-

sion system (2-5) over various paths to a reception system (6-8, 103, 203, 203', 203"), **characterized in that** the time standard (T) is related to the emission time of the pulse ($102_j$) from the transmission system (2-5), in order to obtain the transit times from the time offsets ($t_j$).

18. Method according to one of Claims 11 to 17 for additional measurement of the amplitudes ($A_j$) of the pulses ($02_j$), **characterized in that**
for each reference signal ($149_i$) or reference set ($205_i$), the amplitude ($A_i$) of the associated reference pulse (148;) is also provided, and
**in that** the amplitudes ($A_i$) of those reference pulses ($148_i$) that belong to the determined reference signals ($149_{ij}$) or reference sets ($205_{ij}$) are output as amplitudes ($A_j$) of the pulses ($102_j$).

19. Method according to one of Claims 11 to 18, **characterized in that** at least one additional reception signal (1083) for the pulse ($102_j$) is obtained from an operating state of at least one reception channel (1083), compared to additional reference signals ($149_i$, $149_{i,n}$) previously obtained in this manner for reference pulses ($148_i$) and included in the determination of the comparative deviation (v, v').

20. Method according to one of Claims 11 to 19, **characterized in that** reference signals ($149_i$) or reference sets ($205_i$) for different operating temperatures ($T_1$, $T_2$) are provided and the reference signals ($149_i$) or reference sets ($205_i$) valid for the specified operating temperature are derived therefrom, by interpolation or extrapolation if necessary.

21. Method according to one of Claims 11 to 20, **characterized in that** the minimal comparative deviation (v, v') is determined by means of a least-squares method, in which predeterminable weighting values (g) for the reference signals ($149_i$) or reference sets ($205_i$) are introduced.

22. Method according to one of Claims 11 to 21, **characterized in that** the reference signals ($149_i$, $149_{i,n}$) also originate from reference pulses ($148_{ik}$) of different pulse shape.

**Revendications**

1. Dispositif (101, 201) de mesure des moments de réception ($t_j$) d'impulsions ($102_j$) se superposant au moins en partie dans un système de réception (6 - 8, 103, 203, 203', 203") contenant au moins un canal de réception (6 - 8, 104) qui présente une caractéristique de transmission non linéaire et qui délivre en sortie (10, 107) un signal de réception (108), **caractérisé par**

une mémoire (28, 128), dans laquelle les signaux de réception d'impulsions de référence ($148_i$) de différentes amplitudes prédéfinies ($A_i$) sont présents sous forme de signaux de référence ($149_i$) relativement à une échelle de temps (T), et
une installation d'évaluation (21, 121) qui est reliée au système de réception et à la mémoire, et qui compare un signal de réception (108) avec au moins deux signaux de référence ($149_{ij}$) superposés les uns sur les autres avec chacun un décalage temporel variant ($t_j$) afin de déterminer ces signaux de référence ($149_{ij}$) et ces décalages temporels ($t_j$) pour lesquels l'écart de comparaison (v, v') est minimal et délivre en sortie ces décalages temporels en tant que moments de réception ($t_j$) relativement à l'échelle de temps (T).

2. Dispositif (201) de mesure des moments de réception ($t_j$) d'impulsions ($102_j$), se superposant au moins en partie et présentant une plage dynamique étendue, dans un système de réception (203, 203', 203") qui contient au moins deux canaux de réception parallèles ($104_n$) qui ont une sensibilité différente et qui délivrent en leurs sorties ($207_n$) un ensemble de signaux de réception ($108_n$) parallèles dans le temps, **caractérisé par**
une mémoire (128) dans laquelle les ensembles de signaux de réception d'impulsions de référence ($148_i$) d'amplitudes différentes prédéfinies ($A_i$) sont présents en tant qu'ensembles de référence ($205_i$) relativement à une échelle de temps (T), et
une installation d'évaluation (121) qui est reliée au système de réception (203, 203', 203") et à la mémoire (128), et qui compare un ensemble de signaux de réception ($108_n$) avec au moins deux ensembles de référence ($205_{ij}$) superposés les uns sur les autres selon leurs canaux avec chacun un décalage temporel variant ($t_j$) afin de déterminer ces ensembles de référence ($205_{ij}$) et ces décalages temporels ($t_j$) pour lesquels l'écart de comparaison (v, v') est minimal, et qui délivre en sortie ces décalages temporels en tant que moments de réception ($t_j$) relativement à l'échelle de temps (T).

3. Dispositif selon la revendication 1 ou 2, **caractérisé en ce que** le ou respectivement les canaux de réception (6 - 8, 104, $104_n$) sont d'un type analogique et la mémoire (28, 128) et l'installation d'évaluation (21, 121) sont d'un type numérique, un convertisseur analogue-numérique (9, 109, $109_n$) étant présent à la sortie de chaque canal de réception (6 - 8, 104, $104_n$).

4. Dispositif selon la revendication 3, **caractérisé en ce que** les signaux de référence ($149_i$) respectivement les ensembles de référence ($205_i$) sont présents dans la mémoire (28, 128) avec une première résolution temporelle élevée ($T_m$, $T_h$),

**en ce que** le signal de réception respectivement les signaux de réception (108, $108_n$) d'une impulsion (102) sont échantillonnés avec une deuxième résolution temporelle basse ($T_a$), et

**en ce que** l'installation d'évaluation (21, 121) fait varier les décalages temporels ($t_j$) dans des pas de résolution ($T_m$, $T_h$) de la première résolution temporelle élevée ($T_m$, $T_h$), de préférence d'une manière encore plus fine par une interpolation entre ces pas.

5. Dispositif selon l'une quelconque des revendications 1 à 4, destiné à la mesure supplémentaire des amplitudes ($A_j$) des impulsions ($102_j$), **caractérisé en ce que** la mémoire (28, 128) contient pour chaque signal de référence ($149_i$) respectivement chaque ensemble de référence ($205_i$) également l'amplitude ($A_j$) de l'impulsion de référence associée ($148_i$) et **en ce que** l'installation d'évaluation (21, 121) délivre en sortie les amplitudes ($A_j$) de ces impulsions de référence ($148_i$) qui appartiennent aux signaux de référence ($149_{ij}$) respectivement aux ensembles de référence ($205_i$) déterminés, en tant qu'amplitudes ($A_j$) des impulsions ($102_j$).

6. Dispositif selon l'une quelconque des revendications 1 à 5, **caractérisé en ce que** l'installation d'évaluation (21, 121) pour les moments de réception mesurés ($t_i$) délivre en sortie également l'écart de comparaison associé (v, v') en tant qu'indice de qualité de la mesure.

7. Dispositif selon l'une quelconque des revendications 1 à 6, **caractérisé en ce qu'**il contient au moins un capteur (206, 208) qui mesure un état de fonctionnement d'un ou de plusieurs canaux de réception ($104_3$) et les met à disposition à sa sortie ($207_3$) en quelque sorte en tant qu'autre signal de réception ($108_3$),

**en ce que** la mémoire (128) contient d'autres tels signaux de réception ($108_3$) des impulsions de référence ($148_i$) en tant qu'autres signaux de référence ($149_i$, $149_{i,n}$), et **en ce que** l'installation d'évaluation (21, 121) lors de ladite comparaison compare également un tel autre signal de réception ($108_3$) avec les autres signaux de référence ($149_i$, $149_{i,n}$) et les intègre dans la détermination de l'écart de comparaison (v, v').

8. Dispositif selon l'une quelconque des revendications 1 à 7, **caractérisé en ce qu'**il contient au moins un capteur qui mesure la température de fonctionnement d'un ou de plusieurs canaux de réception (6 - 8, 104, $104_n$),

**en ce que** la mémoire (25 - 28, 128) contient des signaux de référence ($149_i$) respectivement des ensembles de référence ($205_i$) pour différentes températures de fonctionnement ($T_1$, $T_2$), et

**en ce que** l'installation d'évaluation détermine d'après cela les signaux de référence ($149_i$) respectivement les ensembles de référence ($205_i$) valides pour chaque température de fonctionnement actuelle, si nécessaire par interpolation ou extrapolation, et les emploie lors de ladite comparaison.

9. Dispositif selon l'une quelconque des revendications 1 à 8, **caractérisé en ce que** la mémoire (28, 128) contient en outre des valeurs de pondération (g) qui sont destinées aux signaux de référence ($149_i$) respectivement aux ensembles de référence ($205_i$) et qui entrent dans la détermination de l'écart de comparaison minimal (v, v').

10. Dispositif selon l'une quelconque des revendications 1 à 9, **caractérisé en ce que** les signaux de référence ($149_i$, $149_{i,n}$) proviennent également d'impulsions de référence ($148_{ik}$) ayant différentes formes d'impulsion.

11. Procédé de mesure des moments de réception ($t_j$) d'impulsions ($102_j$) se superposant au moins en partie dans un système de réception (6 - 8, 103, 203, 203', 203") contenant au moins un canal de réception (6 - 8, 104) qui présente une caractéristique de transmission non linéaire et qui délivre à sa sortie (10, 107) un signal de réception (108), **caractérisé par** les étapes de :

   mise à disposition des signaux de réception d'impulsions de référence ($148_i$) d'amplitudes différentes prédéfinies ($A_i$) en tant que signaux de référence ($149_i$) relativement à une échelle de temps (T),
   comparaison d'un signal de réception (108) avec au moins deux signaux de référence superposés les uns sur les autres ($149_{ij}$) avec chacun un décalage temporel variant ($t_j$) afin de déterminer ces signaux de référence ($148_{ij}$) et ces décalages temporels ($t_j$) pour lesquels l'écart de comparaison (v, v') est minimal, et
   livraison en sortie de ces décalages temporels en tant que moments de réception ($t_j$) relativement à l'échelle de temps (T).

12. Procédé de mesure des moments de réception ($t_j$) d'impulsions ($102_j$), se superposant au moins en partie et présentant une plage dynamique étendue, dans un système de réception (203, 203', 203") contenant au moins deux canaux de réception parallèles ($104_n$) qui ont une sensibilité différente et qui délivrent en leurs sorties ($207_n$) un ensemble de signaux de réception ($108_n$) parallèles dans le temps, **caractérisé par** les étapes de :

   mise à disposition des ensembles de signaux de réception d'impulsions de référence ($148_i$) d'amplitudes différentes prédéfinies ($A_i$) en tant

qu'ensembles de référence ($205_i$) relativement à une échelle de temps (T),

comparaison d'un ensemble de signaux de réception ($108_n$) avec au moins deux ensembles de référence ($205_{ij}$) superposés les uns sur les autres selon leurs canaux avec chacun un décalage temporel variant ($t_j$) afin de déterminer ces ensembles de référence ($205_{ij}$) et ces décalages temporels ($t_j$) pour lesquels l'écart de comparaison (v, v') est minimal, et

livraison en sortie de ces décalages temporels en tant que moments de réception ($t_j$) relativement à l'échelle de temps (T).

13. Procédé selon la revendication 11 ou 12, **caractérisé,**

**en ce que** les signaux de référence ($149_i$) respectivement les ensembles de référence ($205_i$) sont mis à disposition avec une première résolution temporelle élevée ($T_m$, $T_h$), en ce que le ou respectivement les signaux de réception (108, $108_n$) sont échantillonnés avec une deuxième résolution temporelle basse ($T_a$), et

**en ce que**, lors de la comparaison, les décalages temporels (t) sont variés dans des pas de résolution ($T_m$, $T_h$) de la première résolution temporelle élevée ($T_m$, $T_h$), de préférence affinés en plus par interpolation.

14. Procédé selon la revendication 13, **caractérisé en ce qu'**un signal de référence ($149_i$, $149_{i,n}$) mis à disposition est généré en employant plusieurs impulsions de référence ($148_i$) qui sont de même type, qui sont décalées temporellement dans les pas de résolution d'une résolution temporelle élevée ($T_m$) et dont les signaux de réception (108) sont échantillonnés avec une résolution temporelle basse ($T_a$) et sont assemblés en prise pour former le signal de référence ($149_i$).

15. Procédé selon la revendication 14, **caractérisé en ce que** le signal de référence assemblé ($149_i$) est mis à une résolution temporelle encore plus élevée ($T_h$) par insertion de valeurs d'interpolation (111).

16. Procédé selon l'une quelconque des revendications 13 à 15, **caractérisé en ce que** la première résolution temporelle ($T_m$, $T_h$) est de l'ordre de grandeur des picosecondes et la deuxième résolution temporelle ($T_a$) de l'ordre de grandeur des nanosecondes.

17. Procédé selon l'une quelconque des revendications 11 à 16, destiné à mesurer des durées d'une impulsion ($102_j$) transmise d'un système d'émission (2 - 5) à un système de réception (6 - 8, 103, 203, 203', 203") en passant par différents chemins, **caractérisé en ce que** l'échelle de temps (T) est liée au moment d'émission de l'impulsion ($102_j$) du système d'émission (2 - 5) afin d'obtenir les durées à partir des décalages temporels ($t_j$).

18. Procédé selon l'une quelconque des revendications 11 à 17, destiné à mesurer en plus des amplitudes ($A_j$) des impulsions ($102_j$), **caractérisé en ce que** l'amplitude ($A_i$) de l'impulsion de référence associée ($148_i$) est également mise à disposition de chaque signal de référence ($149_i$) respectivement de chaque ensemble de référence ($205_i$), et **en ce que** les amplitudes ($A_i$) de celles impulsions de référence ($148_i$), qui font partie des signaux de référence déterminés ($149_{ij}$) respectivement des ensembles de référence déterminés ($205_{ij}$), sont délivrées en sortie en tant qu'amplitudes ($A_j$) des impulsions ($102_j$).

19. Procédé selon l'une quelconque des revendications 11 à 18, **caractérisé en ce qu'**au moins un autre signal de réception ($108_3$) d'un état de fonctionnement d'au moins un canal de réception ($108_3$) est acquis pour l'impulsion ($102_j$), est comparé avec d'autres signaux de référence ($149_i$, $149_{i,n}$) acquis de cette façon auparavant pour des impulsions de référence ($148_i$) et est intégré dans la détermination de l'écart de comparaison (v, v').

20. Procédé selon l'une quelconque des revendications 11 à 19, **caractérisé en ce que** des signaux de référence ($149_i$) respectivement des ensembles de référence ($205_i$) sont mis à disposition pour différentes températures de fonctionnement ($T_1$, $T_2$) et, d'après cela, les signaux de référence ($149_i$) respectivement les ensembles de référence ($205_i$) valides pour chaque température de fonctionnement actuelle sont déterminés, si nécessaire par interpolation ou extrapolation.

21. Procédé selon l'une quelconque des revendications 11 à 20, **caractérisé en ce que** la détermination de l'écart de comparaison minimal (v, v') est effectuée à l'aide d'une méthode des moindres carrés selon laquelle des valeurs de pondération prédéfinies (g) sont employées pour les signaux de référence ($149_i$) respectivement pour les ensembles de référence ($205_i$).

22. Procédé selon l'une quelconque des revendications 11 à 21, **caractérisé en ce que** les signaux de référence ($149_i$, $149_{i,n}$) proviennent également d'impulsions de référence ($148_{ik}$) ayant des formes d'impulsion différentes.

*Fig. 1*

**Fig. 2**

**Fig. 3**

**Fig. 4**

**Fig. 5**

EP 2 315 053 B1

**Fig. 6**

*Fig. 7*

*Fig. 8*

**Fig. 9**

**Fig. 10**

**Fig. 11a**

**Fig. 11b**

**Fig. 12a**

**Fig. 12b**

**Fig. 13**

**Fig. 15**

*Fig. 14*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0797105 A2
- US 4541279 A
- AT 5752009 A
- AT 2009000146 W

**In der Beschreibung aufgeführte Nicht-Patentliteratur**

- **WOLFGANG WAGNER ; ANDREAS ULLRICH ; VESNA DUCIC ; THOMAS MELZER ; NICK STUD-NICKA.** Gaussian Decomposition and Calibration of a Novel Small-Footprint Full-Waveform Digitising Airborne Laser Scanner. *ISPRS Journal of Photogrammetry and Remote Sensing,* 2005